# EUROPEAN PATENT APPLICATION

(11) **EP 4 223 436 A1**
(43) Date of publication of application: **09.08.2023**
(21) Application number: 21874370.6
(22) Date of filing: 26.09.2021
(51) Int. Cl.: B22F 9/02, B22D 11/06, C23F 1/44

(54) **ALLOY POWDER, PREPARATION METHOD THEREFOR, AND USE THEREOF**

(30) Priority: 30.09.2020 CN 202011069507
(71) Applicant: Zhao, Yuanyun, Guangdong 523000 (CN)
(72) Inventor: LIU, Li, Dongguan, Guangdong 523000 (CN); ZHAO, Yuanyun, Dongguan, Guangdong 523000 (CN)
(74) Representative: Ipey
(86) International application number: PCT/CN2021/120572
(87) International publication number: WO 2022/068710

(57) **Abstract**

The present disclosure relates to a method for preparing a category of alloy powder and an application thereof. By selecting a suitable alloy system and melting initial alloy melt through low-purity raw materials, high-purity alloy powder, and matrix phase wrapping high-purity alloy powder are precipitated during the solidification process of the initial alloy melt, and the solid solution alloying of the high-purity alloy powder is achieved at the same time. Alloy powder can be obtained by removing the matrix phase wrapping the high-purity alloy powder; high-purity alloy powder can also be obtained by removing the matrix phase wrapping the high-purity alloy powder at an appropriate time. The method is simple and can prepare a variety of alloy powder materials with different morphology at nano-scale, sub-micron level, micron level, and even millimeter level, which has a good application prospect in the fields such as catalysis, powder metallurgy, composite materials, magnetic materials, sterilization, metal injection molding, metal powder 3D printing, coatings and composite materials.

## Description

### TECHNICAL FIELD

The present disclosure relates to the technical field of metal materials, and in particular, to a method for preparing a category of alloy powder, and an application thereof.

### BACKGROUND

Metal powder with the micro-nano particle size has a special surface effect, a quantum size effect, a quantum tunneling effect, and a coulomb blocking effect and shows many unique performances different from the traditional material in the aspects of optical, electrical, magnetic, and catalytic properties, and thus is widely used in multiple fields such as optical electronic components, absorbing materials, and high-performance catalysts.

At present, preparation methods of ultrafine metal powder can be divided into a solid phase method, a liquid phase method, and a gas phase method according to the state of matter. The solid phase method mainly includes a mechanical pulverizing method, an ultrasonic crushing method, a thermal decomposition method, and an explosion method. The liquid phase method mainly includes a precipitation method, an alkoxide method, a carbonyl method, a spray thermal drying method, a freeze-drying method, an electrolysis method, and a chemical condensation method. The gas phase method mainly includes a gas phase reaction method, a plasma method, a high temperature plasma method, an evaporation method, and a chemical vapor deposition method. Although there are many methods for preparing ultrafine metal powder, each method has some limitations. For example, the disadvantages of the liquid phase method are low yield, high cost, and complex process. The disadvantage of the mechanical method is that powder grading is difficult after the powder is prepared, and it is hard to guarantee the purity, fineness, and morphology of the powder. The rotary electrode method and the gas atomization method are the current main methods for the preparation of high-performance metal and alloy powder, but the production efficiency is low, the yield of ultrafine powder is not high, and the energy consumption is relatively large. The air flow grinding method and the hydrogenation dehydrogenation method are suitable for mass industrial production, but they have strong selectivity for raw metal and alloy.

Moreover, the content of impurities, especially oxygen, in metal powder or alloy powder has a great influence on its properties. At present, the content of impurities in metal powder or alloy powder is mainly controlled by controlling the purity of raw materials and vacuum degree, which is high in cost. Therefore, it is of great significance to develop a new method for preparing high-purity metal powder materials.

### SUMMARY

Based on the foregoing, it is necessary to provide a method for preparing a high-purity alloy powder material that is simple in process, low in cost, and easy to operate in view of the aforementioned technical problems.

In order to solve the aforementioned technical problems, the technical proposal of the present disclosure is:

A metal material composed of endogenous alloy powder and wrapping body, wherein the metal material is prepared by solidification of an alloy melt, and a structure of the metal material includes a dispersed particle phase endogenously precipitated during solidification of the initial alloy and the matrix phase wrapping the dispersed particles, which correspond to the endogenous alloy powder and the wrapping body, respectively; the major elementary composition of the endogenous alloy powder is Mₐ₁A_{b1}T_{c1}, and the major elementary composition of the wrapping body is A_{b2}T_{c2}; both M and A contain one or more metal elements, T is an impurity element including oxygen, a1, b1, c1, b2, and c2 represent atomic percentage contents of the corresponding element respectively, and a1+b1+c1=100%, b2+c2=100%, c2>c1>0, b1>0; the melting point of the endogenous alloy powder is higher than that of the wrapping body; the endogenous Mₐ₁A_{b1}T_{c1} alloy powder contains element A in a solid solution; the M and A comprise a pair or pairs of M¹-A¹ element combinations that will not form corresponding intermetallic compounds, wherein M¹ represents any single element in M and A¹ represents any single element in A, the main elements in M are composed of each M¹ element that satisfies the combination conditions of M¹-A¹, and the main elements in A are composed of each A¹ element that satisfies the combination conditions of M¹-A¹, so that the metal material composed of endogenous alloy powder and wrapping body will not form intermetallic compounds composed of the main elements in M and the main elements in A after being completely melted and re-solidified, but form an endogenous Mₐ₁A_{b1}T_{c1} alloy powder and a A_{b2}T_{c2} wrapping body.

Supplementary instruction: T is the impurity elements including oxygen, which means that T is the impurity elements, and T includes oxygen.

The solidification methods of the initial alloy melt include ordinary casting, continuous casting, melt spinning, and melt extraction. The particle size of the endogenous alloy powder is related to the solidification rate of the initial alloy melt. In general, the particle size of the endogenous alloy powder is negatively correlated with the solidification rate of the initial alloy melt, that is, the larger the solidification rate of the initial alloy melt, the smaller the particle size of the endogenous alloy powder is.
Furthermore, the solidification method of the initial alloy melt does not include the solidification method corresponding to the atomization pulverization technology;
Supplementary instruction: the solidification rate of the initial alloy melt ranges from 0.001K/s to 10⁸K/s;
Furthermore, the range of solidification rate of the initial alloy melt includes 0.001K/s to 10'K/s;
Furthermore, the range of particle size of the endogenous alloy powder includes 3nm to 10mm.

Supplementary instruction: the particle size of the endogenous alloy powder ranges from 3nm to 1mm;
Preferably, the particle size of the endogenous alloy powder ranges from 3nm to 500µm;
Preferably, the particle size of the endogenous alloy powder ranges from 3nm to 99µm;
Preferably, the particle size of the endogenous alloy powder ranges from 3nm to 25µm;
Preferably, the particle size of the endogenous alloy powder ranges from 3nm to 10µm;
Furthermore, the particle shape of the endogenous alloy powder is not specified, which may include at least one of dendritic shape, spherical shape, sub-spherical shape, square shape, pie shape, and rod shape; in the case of rod shape particles, the particle size refers to the diameter of the cross-section of the rod.

The shape of the metal material composed of endogenous alloy powder and wrapping body is related to the solidification methods: in the case of continuous casting, its shape is mainly lath shape; in the case of melt spinning, its shape is mainly ribbon or sheet shape; and in the case of melt extraction, its shape is mainly wire shape. The higher the solidification rate is, the thinner, smaller, and narrower the cross-section of the metal material composed of endogenous alloy powder and wrapping body is; conversely, the thicker, bigger, and wider the cross-section is.

Furthermore, the shape of the metal material composed of endogenous alloy powder and wrapping body does not include the powder of the product corresponding to the atomization pulverizing technology.

Furthermore, when the initial alloy melt is solidified by means including melt spinning and the solidification rate is 100K/s∼10⁷K/s, a ribbon of the metal material composed of endogenous alloy powder and wrapping body with a thickness of 10µm∼5mm can be obtained, the particle size of the contained endogenous alloy powder ranges from 3nm to 200µm.

Furthermore, when the initial alloy melt is solidified by means including ordinary casting or continuous casting, and the solidification rate is 0.001K/s~100K/s, the metal material composed of endogenous alloy powder and wrapping body in the shape of a block with at least one dimension in the direction of three-dimensional scale exceeds 5mm can be obtained, and the particle size of the contained endogenous alloy powder ranges from 200µm to 10mm.
Supplementary instruction: furthermore, the metal material composed of endogenous alloy powder and wrapping body is in the shape of a ribbon, of which the thickness is 5µm∼5mm;
Furthermore, the metal material composed of endogenous alloy powder and wrapping body is in the shape of a ribbon, of which the thickness is 10µm∼1mm;
Furthermore, the lower limit of the volume percentage content of the endogenous alloy powder in the metal material composed of endogenous alloy powder and wrapping body is 1%, and the upper limit is the volume percentage content that the endogenous alloy powder can be dispersively distributed in the wrapping body.

When considering the amount of endogenous alloy powder that can be wrapped by the wrapping body, it is necessary to be accurately evaluated through the volume percentage content of the endogenous alloy powder, because the volume correlation is directly related to the dispersed distribution of the endogenous alloy powder. The volume percentage content of the endogenous alloy powder can be converted to atomic percentage content through the relations of each element such as density and atomic weight. In case the matrix element of the wrapping body is an element with a large atom, the matrix can lead to a higher volume percentage content through a smaller atomic percentage content, so as to significantly increase the content of endogenous alloy powder that can be wrapped. For example, in an alloy melt with atomic percentage composition of CesoTiso, the weight percentage content of Ce and Ti is 74.53 wt% and 25.47 wt% respectively, in view that the density of Ce and Ti is 6.7 g/cm³ and 4.5 g/_{CM}³ respectively, it can be calculated that the volume percentage content of Ce and Ti in the melt with atomic percentage content of Ce₅₀Ti₅₀ is 66 vol% and 34 vol% respectively. If Ti is precipitated from the melt, without considering the solid solution and the impurities, its volume percentage content is only about 34 vol%, indicating that even if atomic percentage content of Ti in the Ce-Ti alloy exceeds 50%, its volume percentage content may still be significantly lower than 50%, which is beneficial to obtain dispersively distributed Ti particles.

Since the application of the metal material composed of endogenous alloy powder and wrapping body mainly depends on the application of the corresponding endogenous alloy powder, the wrapping body should be removed later. Therefore, if the volume percentage content of the endogenous alloy powder is less than 1%, it will be a great waste of the wrapping body material, losing the practical significance of material application.

The size and morphology of the endogenous alloy powder produced by different alloy systems and different solidification rates are also different. For example, in the case where the cooling rate is relatively high and the endogenous alloy powder is mainly fine spherical or sub-spherical nano-scale powder, the growth of the particles is confined and it is easy to maintain a certain space and distance between particles, so it can reach a relatively high volume percentage content of the endogenous alloy powder under the condition that the endogenous alloy powder is dispersed distribution in the wrapping body; in case that the cooling rate is relatively low and the endogenous alloy powder is mainly gross dendrite, the growth of the particles is sufficient, and it is easy for different particles to meet, merge and tangle during the growth process of the endogenous alloy particles, so the dendritic endogenous alloy powder can only reach relatively low volume percentage content under the condition that the endogenous alloy particles are dispersed distribution in the wrapping body.
Preferably, the volume percentage content of the endogenous alloy powder in the metal material composed of endogenous alloy powder and wrapping body ranges from 5% to 50%;
Further preferably, the volume percentage content of the endogenous alloy powder in the metal material composed of endogenous alloy powder and wrapping body ranges from 5% to 40%; the lower limit ensures the economy, and the upper limit fully ensures that the endogenous alloy powder can be dispersively distributed in the wrapping body.

The endogenous alloy powder is solidified and precipitated from the initial melt. According to the nucleation and growth theory, the crystal growth of either the sub-spherical nano-scale particle that is just nucleated and grown up or the micron-scale dendrite particle that is fully grown has a fixed orientation relationship, so that all individual particles precipitated are mainly composed of a mono-crystal.

When the volume percentage content of endogenous alloy powder is relatively high, it cannot be excluded that two or more particles can be merged during the endogenous precipitation of the mono-crystalline particle. If two or more mono-crystalline particles are only weakly agglomerated, mutually adsorbed, or connected by only a few contacts without being fully coalesced into one particle through normal grain boundary as in poly-crystalline materials, they are still two mono-crystalline particles. After the removal of the wrapping body in a subsequent process, these mono-crystalline particles can be separated easily by techniques such as ultrasonic dispersion treatment and jet mill crushing. However, for normal ductile poly-crystalline metal materials, it is difficult to separate the grain boundaries by techniques such as ultrasonic dispersion treatment and jet mill crushing.

Preferably, the number of mono-crystalline particles of the endogenous alloy powder accounts for no less than 60% of the total number of particles.

Further preferably, the number of mono-crystalline particles of the endogenous alloy powder accounts for no less than 75% of the total number of particles.

Further preferably, the number of mono-crystalline particles of the endogenous alloy powder accounts for no less than 90% of the total number of particles.

Supplementary instruction: in the metal material composed of endogenous alloy powder and wrapping body, both the endogenous alloy powder and the wrapping body are crystalline state;
The major element composition of the endogenous alloy powder is Mₐ₁A_{b1}T_{c1}, and the major element composition of the wrapping body is A_{b2}T_{c2}; both M and A contain one or more metal elements, T is the impurity element including oxygen, a1, b1, c1, b2, c2 represent atomic percentage contents of the corresponding element respectively, and a1+b1+c1=100%, b2+c2=100%.

Here the composition of the elements is represented by using the atomic percent contents of the elements, such that the increase or decrease of the contents of the elements can be accurately expressed using the concept of substance amount, for example, the increase or decrease of the contents of the impurity elements. If the contents of various elements are represented by using the weight percent contents (or PPM) of the elements, an incorrect conclusion is easy to make due to the different atomic weights of the elements. For example, if an alloy with an atomic percent content of Ti₄₅Gd₄₅O₁₀ contains 100 atoms, where the atomic percent content of O is 10 at%. The 100 atoms are divided into Ti₄₅O₄ (atomic percent composition is Ti_{91.8}O_{8.2}) and Gd₄₅O₆ (atomic percent composition is Gd_{88.2}O_{11.8}). The atomic percent content of oxygen in Gd₄₅O₆ is increased to 11.8 at%, and the atomic percent content of oxygen in Ti₄₅O₄ is decreased to 8.2 at%, and thus it is accurately shown that O is enriched in Gd. If measured by a weight percent content of O, the weight percent content of O in Ti₄₅Gd₄₅O₁₀ is 1.70 wt%, the weight percent contents of O in Ti₄₅O₄ and Gd₄₅O₆ are 2.9 wt.% and 1.34 wt.% respectively. In this case, an incorrect conclusion that the content of O in Ti₄₅O₄ is increased compared with the content of O in Gd₄₅O₆ can be made.

Furthermore, the melting point of the endogenous Mₐ₁A_{b1}T_{c1} alloy powder is higher than that of the A_{b2}T_{c2} wrapping body; when such condition is satisfied, the matrix phase of the initial alloy solidifies last and wraps the endogenous alloy powder.

Furthermore, the endogenous Mₐ₁A_{b1}T_{c1} alloy powder contains element A in a solid solution, that is, 0<b1.

Preferably, 0<b1≤15%; that is, up to 15% of element A (in atomic percentage content) can be solidly dissolved in endogenous Mₐ₁A_{b1}T_{c1} alloy powder. The solid solubility of A in endogenous Mₐ₁A_{b1}T_{c1} alloy powder varies according to different major element compositions, impurity content, and solidification rate of the specific alloy melt. In general, if the solidification rate of the melt is relatively high and the endogenous alloy powder is relatively small, such as nano-scale powder, more element A can be solidly dissolved.

Furthermore, the endogenous alloy powder contains a certain amount of impurity T, and the content of impurity element T in endogenous alloy powder is lower than the content of impurity element T in the wrapping body, that is, c2>c1>0. This indicates that for the metal material composed of endogenous alloy powder and wrapping body prepared by solidification of an alloy melt, the impurity element will be enriched in the A_{b2}T_{c2} wrapping body, and the endogenous Mₐ₁A_{b1}T_{c1} alloy powder will be purified.

Furthermore, T is the collection of O, H, N, P, S, F, and Cl impurity elements, and T includes O, and 0<cl<1.5%.

Supplementary instruction: T includes O, and the content of O is larger than zero; if some element of H, N, P, S, F, and Cl listed above is not contained in T, its content is zero in T, otherwise, its content in T is larger than zero; the content of T is the total content of O, H, N, P, S, F and Cl elements.

Preferably, T is the collection of O, H, N, P, S, F, and Cl impurity elements, and T includes O, and 0.01%≤c1≤1.5%.

Both the M and A contain one or more metal elements, the selection of M and A is the key to preparing the metal material composed of endogenous alloy powder and wrapping body. In order to ensure that the solidification process of the alloy melt will not generate an intermetallic compound composed of the main elements of M and the main elements of A, but generate the endogenous Mₐ₁A_{b1}T_{c1} alloy powder and a A_{b2}T_{c2} wrapping body, M and A should satisfy the following relations:
The M and A comprise a pair or pairs of M¹-A¹ element combinations that will not form corresponding intermetallic compounds, wherein M¹ represents any single element in M and A¹ represents any single element in A, and the main elements in M are composed of each M¹ element that satisfies the combination conditions of M¹-A¹, and the main elements in A are composed of each A¹ element that satisfies the combination conditions of M¹-A¹.

Furthermore, in M or A, if atomic percentage content of the collection of each M¹ element or the collection of each A¹ element satisfying the above combination conditions accounts for more than 30% in M or A, they can be called the main element in M or A, respectively.

Furthermore, when M includes at least one of W, Cr, Mo, V, Ta, Nb, Zr, Hf, Ti, Fe, Co, Ni, Mn, Cu, and Ag, and A includes at least one of Y, La, Ce, Pr, Nd, Pm, Sm, Eu, Gd, Tb, Dy, Ho, Er, Tm, Yb, Lu, Mg, Ca, Li, Na, K, In, Pb, and Zn, the intermetallic compound composed of the main elements in M and A will not form during the solidification process of the alloy melt. According to the alloy phase diagrams, among the elements listed above, for any of a single element in M, an M¹-A¹ combination pair that will not form an intermetallic compound can be found in A, such as Cr-Y, Ti-Ce, Fe-Mg, Co-K, Ni-Li, Mn-Mg, Cu-Li, and Ag-Pb combination pair. If there are multiple M¹-A¹ combination pairs between M and A, the collection of each M¹ and the collect of each A¹ still satisfy the condition that no intermetallic compounds can form during the solidification of the alloy melt. For example, if each of the Ti-Ce, Ti-Gd, Nb-Ce, and Nb-Gd combination pair satisfies the conditions of the M¹-A¹ combination pair, then the (Ti-Nb)-(Ce-Gd) combination pair will still satisfy the condition that no intermetallic compounds can form during the solidification of the alloy melt. Thus the main elements in M include Ti and Nb; and the main elements in A include Ce and Gd.

In addition, when the main elements in M and the main elements in A satisfy one or more M¹-A¹ combination pairs, if M includes an element M² which can form a stable intermetallic compound with a high melting point with the main element M¹, M¹, and M² will form a stable M¹-M² intermetallic compound with a high melting point, and both M¹ and M² will not form an intermetallic compound with the main elements in A. In this case, the endogenous alloy powder is the M¹-M² intermetallic compound powder.

Preferably, M includes at least one of W, Cr, Mo, V, Ta, Nb, Zr, Hf, and Ti, and A includes at least one of Y, La, Ce, Pr, Nd, Pm, Sm, Eu, Gd, Tb, Dy, Ho, Er, Tm, Yb, and Lu.

Preferably, when M includes at least one of W, Cr, Mo, V, Ta, Nb, Zr, Hf, and Ti, while including at least one of Fe, Co, and Ni at the same time, these two subclass elements in M may form intermetallic compounds with a high melting point. When A includes at least one of Y, La, Ce, Pr, Nd, Pm, Sm, Eu, Gd, Tb, Dy, Ho, Er, Tm, Yb, and Lu, endogenous intermetallic compound powder mainly composed of these two subclass elements in M can be formed.

Preferably, when M includes at least one of the subclass elements of W, Cr, Mo, V, Ta, Nb, Zr, Hf, and Ti, while including at least one of the subclass elements of Fe, Co, and Ni, and the molar ratio of these two subclass elements is about 1:1, these two subclass elements in M can form a stable intermetallic compound with a high melting point. When A includes at least one of Y, La, Ce, Pr, Nd, Pm, Sm, Eu, Gd, Tb, Dy, Ho, Er, Tm, Yb, and Lu, in the solidification process of the alloy melt, an endogenous intermetallic compound powder composed mainly of these two subclass elements in M with a molar ratio of about 1: 1 and a wrapping body composed mainly of element A are formed.

Preferably, M includes at least one of Mn, Fe, Ni, Cu, and Ag, and A includes at least one of Mg, La, In, Na, K, Li, and Pb.

Furthermore, M includes at least one of Ir, Ru, Re, Os, Tc, W, Cr, Mo, V, Ta, Nb, Zr, Hf, Ti, and Fe, and A includes at least one of Cu and Zn.

Supplementary instruction: further, M includes at least one of Ir, Ru, Re, Os, Tc, W, Cr, Mo, V, Ta, and Nb, and A includes Cu.

Furthermore, M includes at least one of Ir, Ru, Re, Os, and Tc, and A includes Cu.

It should be noted that the A, M, or T may include other alloyed elements or impurity elements other than the elements listed above. As long as the change of the contents of these elements does not cause a "qualitative change" in the initial alloy solidification process and the inherent law, it does not affect the achievement of the above technical proposal of the disclosure.

The present disclosure also relates to an alloy powder, wherein the alloy powder is prepared by removing the wrapping body of the metal material composed of endogenous alloy powder and wrapping body, and its major elementary composition is Mₐ₃A_{b3}T_{c3}, a3, b3, and c3 represent atomic percentage contents of the corresponding elementary compositions respectively, b3>0, a3+b3+c3=100%, and the content of element T in the alloy powder is higher than that in the endogenous alloy powder, that is, c3>c1>0.

The alloy powder is prepared by removing the wrapping body of the metal material composed of endogenous alloy powder and wrapping body. Therefore, most of the characteristics of the alloy powder are consistent with those of the endogenous alloy powder. The difference is that the endogenous alloy powder is wrapped in the wrapping body, eliminating the influence of impurities such as oxygen in the environment. For the alloy powder, especially when the particle size of the alloy powder is fine (for example, nano-scale alloy powder), the surface atoms of the alloy powder will combine with an impurity element such as oxygen in the exposure process, increasing the content of element T, that is, c3>c1>0.

Preferably, the number of mono-crystalline particles in the alloy powder accounts for no less than 60% of the total number of particles.

Further preferably, the number of mono-crystalline particles in the alloy powder accounts for no less than 75% of the total number of particles.

Further preferably, the number of mono-crystalline particles in the alloy powder accounts for no less than 90% of the total number of particles.

Preferably, the particle size of the alloy powder ranges from 3nm to 10mm.
Supplementary instruction: the particle size of the alloy powder ranges from 3nm to 1mm;
Preferably, the particle size of the alloy powder ranges from 3nm to 500µm;
Preferably, the particle size of the alloy powder ranges from 3nm to 99µm;
Preferably, the particle size of the alloy powder ranges from 3nm to 25µm;
Preferably, the particle size of the alloy powder ranges from 3nm to 10µm;
Preferably, the particle size of the alloy powder ranges from 3nm to 5µm;
The present disclosure also relates to a spherical or sub-spherical alloy powder, wherein the spherical or sub-spherical alloy powder is prepared through a plasma spheroidization treatment of the alloy powder. And its major elementary composition is Mₐ₄A_{b4}T_{c4}, a4, b4, and c4 represent atomic percentage contents of the corresponding elementary compositions respectively, b4>0, a4+b4+c4=100%, and the content of element T in the spherical or sub-spherical alloy powder is higher than that in the alloy powder without plasma spheroidization treatment, that is, c4>c3>c1>0.

Furthermore, before the plasma spheroidization treatment, the selected particles are subject to jet mill pre-crushing treatment; the possible tangled particles can be dispersed and broken by a jet mill, thus facilitating the subsequent plasma spheroidization treatment.

Furthermore, before the plasma spheroidization treatment the selected alloy powder is subject to screening treatment.

Furthermore, the particle size of the alloy powder to be plasma spheroidized ranges from 5µm to 200µm.

Supplementary instruction: the particle size of the alloy powder to be plasma spheroidized ranges from 5µm to 100µm.

The present disclosure also relates to a method for preparing a metal material composed of endogenous alloy powder and wrapping the body, which is prepared by the following steps:
melting initial alloy melt with the main elementary composition of Mₐ₀A_{b0}T_{c0}, wherein both M and A contain one or more metal elements, T is the impurity element including oxygen, a0, b0, and c0 represent atomic percentage contents of the corresponding element respectively, a0+b0+c0=100%, 0<c0<15%; the M and A comprise a pair or pairs of M¹-A¹ element combinations that will not form corresponding intermetallic compounds, wherein M¹ represents any single element in M and A¹ represents any single element in A, and the main elements in M are composed of each M¹ element that satisfies the combination conditions of M¹-A¹, and the main elements in A are composed of each A¹ element that satisfies the combination conditions of M¹-A¹,
solidifying the Mₐ₀A_{b0}T_{c0} initial alloy melt into a solid state, thus obtaining dispersed Mₐ₁A_{b1}T_{c1} particle phase endogenously precipitated from the melt and A_{b2}T_{c2} matrix phase wrapping the dispersed particles, which are the metal material composed of endogenous alloy powder and wrapping body, and 0<c1<c0<c2, that is, the content of element T in the Mₐ₀A_{b0}T_{c0} initial alloy melt is higher than that in the dispersed Mₐ₁A_{b1}T_{c1} particle phase but lower than that in the A_{b2}T_{c2} matrix phase.

The solidification methods of the initial alloy melt include ordinary casting, continuous casting, melt spinning, and melt extraction. The particle size of the endogenous alloy powder is related to the solidification rate of the initial alloy melt. In general, the particle size of the endogenous alloy powder is negatively correlated with the solidification rate of the initial alloy melt, that is, the larger the solidification rate of the initial alloy melt, the smaller the particle size of the endogenous alloy powder is.
Furthermore, the solidification method of the initial alloy melt does not include the solidification method corresponding to the atomization pulverization technology;
Supplementary instruction: the solidification rate of the initial alloy melt ranges from 0.001K/s to 10⁸K/s;
Furthermore, the range of solidification rate of the initial alloy melt includes 0.001K/s to 10'K/s;

Furthermore, the range of particle size of the endogenous alloy powder includes 3nm to 10mm.

Furthermore, the particle shape of the endogenous alloy powder is not specified, which may include at least one of dendritic shape, spherical shape, sub-spherical shape, square shape, pie shape, and rod shape; in the case of rod shape particles, the particle size refers to the diameter of the cross-section of the rod.

The shape of the metal material composed of endogenous alloy powder and wrapping body is related to the solidification method: in the case of continuous casting, its shape is mainly lath shape; in the case of melt spinning, its shape is mainly ribbon or sheet shape; in case of melt extraction, its shape is mainly wire shape. The higher the solidification rate is, the thinner, smaller, and narrower the cross-section of the metal material composed of endogenous alloy powder and wrapping body is; conversely, the thicker, bigger, and wider the cross-section is;

Furthermore, the shape of the metal material composed of endogenous alloy powder and wrapping body does not include the powder of the product corresponding to the atomization pulverizing technology.

Furthermore, when the initial alloy melt is solidified by means including melt spinning and the solidification rate is 100K/s∼10⁷K/s, a ribbon of the metal material composed of endogenous alloy powder and wrapping body with a thickness of 10µm∼5mm can be obtained, the particle size of the contained endogenous alloy powder ranges from 3nm to 200µm.

Furthermore, when the initial alloy melt is solidified by means including ordinary casting or continuous casting, and the solidification rate is 0.001K/s~100K/s, the metal material composed of endogenous alloy powder and wrapping body in the shape of a block with at least one dimension in the direction of three-dimensional scale exceeds 5mm can be obtained, the particle size of the contained endogenous alloy powder ranges from 200µm to 10mm.
Supplementary instruction: furthermore, the metal material composed of endogenous alloy powder and wrapping body is in the shape of a ribbon, of which the thickness is 5µm∼5mm;
Furthermore, the metal material composed of endogenous alloy powder and wrapping body is in the shape of a ribbon, of which the thickness is 10µm∼1mm;
Furthermore, the metal material composed of endogenous alloy powder and wrapping body is in the shape of a ribbon, of which the thickness is 10µm∼500µm;
Furthermore, the metal material composed of endogenous alloy powder and wrapping body is in the shape of a ribbon, of which the thickness is 10µm∼100µm;
Furthermore, the lower limit of the volume percentage content of the endogenous alloy powder in the metal material composed of endogenous alloy powder and wrapping body is 1%, and the upper limit is the volume percentage content that the endogenous alloy powder can be dispersively distributed in the wrapping body.
Preferably, the volume percentage content of the endogenous alloy powder in the metal material composed of endogenous alloy powder and wrapping body ranges from 5% to 50%;
Further preferably, the volume percentage content of the endogenous alloy powder in the metal material composed of endogenous alloy powder and wrapping body ranges from 5% to 40%; the lower limit ensures the economy, and the upper limit fully ensures that the endogenous alloy powder can be dispersively distributed in the wrapping body.

Preferably, the number of mono-crystalline particles of the endogenous alloy powder accounts for no less than 60% of the total number of particles.

Further preferably, the number of mono-crystalline particles of the endogenous alloy powder accounts for no less than 75% of the total number of particles.

Further preferably, the number of mono-crystalline particles of the endogenous alloy powder accounts for no less than 90% of the total number of particles.

Furthermore, the melting point of the endogenous Mₐ₁A_{b1}T_{c1} alloy powder is higher than that of the A_{b2}T_{c2} wrapping body; when such condition is satisfied, the matrix phase of the initial alloy solidifies last and wraps the endogenous alloy powder.

Furthermore, the endogenous Mₐ₁A_{b1}T_{c1} alloy powder contains element A in a solid solution, that is, 0<b1.

Preferably, 0<b1≤15%; that is, up to 15% of element A (in atomic percentage content) can be solidly dissolved in endogenous Mₐ₁A_{b1}T_{c1} alloy powder. The solid solubility of A in endogenous Mₐ₁A_{b1}T_{c1} alloy powder varies according to different major element compositions, impurity content, and solidification rate of the specific alloy melt. In general, if the solidification rate of the melt is relatively high and the endogenous alloy powder is relatively small, such as nano-scale powder, more element A can be solidly dissolved.

Supplementary instruction: furthermore, 0.01%<b1≤15%; furthermore, 0.05%<b1≤15%; furthermore, 0.1%<b1≤15%;
Furthermore, T is the collection of O, H, N, P, S, F, and C1 impurity elements, and T includes O, and 0<cl<1.5%.

Furthermore, T is the collection of O, H, N, P, S, F, and C1 elements and T includes O, all of which are non-metal elements with similar properties. It is found in the present disclosure that element T in the initial alloy melt has significant thermodynamic effects on the diffusion and phase distribution of elements A, M, and T in the matrix phase and dispersed particle phase during the solidification process of initial alloy melt; through such thermodynamic effects, when the content of T is relatively high, more A element can be solidly dissolved in endogenous Mₐ₁A_{b1}T_{c1} alloy powder. The possible reason is that elements A, M, and T in the initial alloy melt are uniformly mixed at the beginning, and in the cooling and solidification process of the initial alloy melt, the dispersed particle phase with a major composition of M will first precipitate from the melt. During the precipitation process, the element T atoms are expelled, and some vacancies may form during such process, which can be replaced by either element M atoms or element A atoms; therefore, under the same conditions, the higher the content of element T is, the more the vacancies that can be replaced are, and the more the content of element A solidly dissolved in the endogenous Mₐ₁A_{b1}T_{c1} alloy powder. Therefore, in addition to the influence of the main elementary composition of the initial alloy melt, the amount of element A solidly dissolved in the endogenous Mₐ₁A_{b1}T_{c1} alloy powder is also influenced by the thermodynamics and kinetics during the solidification process of the initial alloy melt; from the perspective of thermodynamics, when the content of T is relatively high, more element A can be solidly dissolved in the endogenous Mₐ₁A_{b1}T_{c1} alloy powder; from the perspective of kinetics, in case of relatively high solidification rate of the initial alloy melt and forming smaller endogenous alloy powder, more A element can be solidly dissolved in the endogenous Mₐ₁A_{b1}T_{c1} alloy powder.

Furthermore, the Mₐ₀A_{b0}T_{c0} initial alloy melt is prepared by melting alloy raw materials that comprise the first and the second raw materials; the major elementary composition of the first raw material is M_{d1}Tₑ₁, and the major element composition of the second raw material is A_{d2}Tₑ₂, d1, e1, d2, and e2 represent atomic percentage contents of the corresponding constituent elements respectively, and 0<e1≤10%, 0<e2≤10%, d1+e1=100%, d2+e2=100%.

Preferably, 0<c0≤10%, 0<e1≤7.5%, 0<e2≤7.5%.

Further preferably, 0.01%≤c0≤10%, 0.01%≤e1≤7.5%, 0.01%≤e2≤7.5%.

This indicates that metal material composed of endogenous alloy powder and wrapping body containing high-purity target endogenous alloy powder can be prepared with low-purity raw materials.

Supplementary instruction: furthermore, in multiple examples, as for the metal material composed of endogenous alloy powder and wrapping body, the content of impurity T in the endogenous Mₐ₁A_{b1}T_{c1} alloy powder is greatly reduced compared with that in the M_{d1}Tₑ₁ raw material, that is, the content of impurity T in the endogenous Mₐ₁A_{b1}T_{c1} alloy powder is less than the content of T in M_{d1}Tₑ₁ raw material, that is, c1 is less than e1.

Supplementary instruction: furthermore, in multiple examples, as for the metal material composed of endogenous alloy powder and wrapping body, the volume percentage content of the endogenous Mₐ₁A_{b1}T_{c1} alloy powder is equivalent to the volume percentage content of the M_{d1}Tₑ₁ raw material when the raw material was prepared; "be equivalent to" means "be close to". Therefore, according to the designed volume percentage of endogenous Mₐ₁A_{b1}T_{c1} alloy powder in the targeted metal material composed of endogenous alloy powder and wrapping body, the volume percentage content of the M_{d1}Tₑ₁ raw material and A_{d2}Tₑ₂ raw material required for melting the Mₐ₀A_{b0}T_{c0} initial alloy melt can be roughly calculated; when the volume percentage content of M_{d1}Tₑ₁ raw material and A_{d2}Tₑ₂ raw material is determined, the relative ratio of a0 to b0 can be calculated by the atomic weight and density of each element.

It should be noted that impurity elements such as O in the atmosphere may enter the melt during the melting process, there may be instances that c0>e1, c0>e2, that is, the content of impurities in the Mₐ₀A_{b0}T_{c0} initial alloy powder increases compared with the total content of impurities in the alloy raw materials.

Supplementary instruction: at the same time, in the melting process of initial alloy melt, part of element T may react with M or A to form a small amount of slag floating on the melt surface. Since the slag is usually solid and does not belong to the initial alloy melt, the content of element T in the initial alloy melt may also be c0<e1, c0<e2, that is, the content of impurities in the Mₐ₀A_{b0}T_{c0} initial alloy powder decreases compared with the total content of impurities in the alloy raw materials.

The present disclosure also relates to a method for preparing alloy powder, which is characterized in that the alloy powder is prepared by removing the wrapping body part of the metal material composed of endogenous alloy powder and wrapping body while retaining the endogenous alloy powder which cannot be simultaneously removed.

Furthermore, the methods of removing the wrapping body while retaining the endogenous alloy powder include at least one of an acid solution dissolution reaction for removal, an alkali solution dissolution reaction for removal, a vacuum volatilization for removal, and a wrapping body natural oxidation-powdering peeling removal.

In case of removal by acid solution reaction, an appropriate type of acid and concentration should be selected, of which the standard is to ensure that the A_{b2}T_{c2} wrapping body becomes ions and dissolves in the solution, while the endogenous Mₐ₁A_{b1}T_{c1} alloy powder almost does not react with the corresponding acid, so as to achieve the removal of wrapping body.

Furthermore, the acid solution is degassed so that it has a lower value of dissolved oxygen and nitrogen.

In case of removal by alkali solution reaction, an appropriate type of alkali and concentration should be selected, of which the standard is to ensure that the wrapping body A_{b2}T_{c2} becomes ions and dissolves in the solution, while the endogenous Mₐ₁A_{b1}T_{c1} alloy powder almost does not react with the corresponding alkali, so as to achieve the removal of wrapping body.

Furthermore, the alkali solution is degassed so that it has a lower value of dissolved oxygen and nitrogen.

In case of removal by vacuum volatilization, appropriate vacuum degree and temperature condition should be selected, of which the standard is to ensure that the A_{b2}T_{c2} wrapping body with low melting point is volatilized, while the endogenous Mₐ₁A_{b1}T_{c1} alloy powder is not volatilized but retained, so as to achieve the removal of wrapping body.

In case the wrapping body is very easy to be naturally oxidized and pulverized, the oxidized and pulverized wrapping body can be preliminarily removed, and then the wrapping body can be completely removed by other means.

Supplementary instruction: furthermore, in an example, M includes Fe, and A includes La, the metal material composed of endogenous alloy powder and wrapping body is a metal ribbon formed by the endogenous Fe alloy powder and La wrapping body, the endogenous Fe alloy powder contains element La in solid solution, through the natural oxidation-powdering peeling of the La wrapping body, the endogenous Fe alloy powder is pre-separated from the oxide powder of La matrix, then based on the magnetic properties of the Fe alloy powder, the magnetic field is used to separate the Fe alloy powder and the oxide powder of La matrix.

The present disclosure also relates to an application of the alloy powder in powder metallurgy, metal injection molding, magnetic materials, and coatings.

Furthermore, the alloy powder with relatively large particle size can be applied in the field of powder metallurgy and metal injection molding; the alloy powder with relatively small particle size (such as nano-meter scale) can be applied in the field of coating, mainly as a coating additive with special functions.

Furthermore, if the alloy powder is soft magnetic alloy powder, it can be used in the field of magnetic materials.

The present disclosure also relates to an application of the spherical or sub-spherical alloy powder in powder metallurgy, metal injection molding, and metal powder 3D printing.

The present disclosure also relates to an application of the metal material composed of endogenous alloy powder and wrapping body in coatings and composite materials.

Furthermore, it is characterized in that the metal material composed of endogenous alloy powder and wrapping body with the average particle size of the endogenous alloy powder lower than 1000nm is selected, and its wrapping body is removed; the obtained alloy powder is mixed with other components of the coatings or composite materials at the same time or immediately after the removal of the wrapping body, so as to reduce the content of impurities including O, which is newly introduced on the surface of the alloy powder due to the exposure of the alloy powder surface; thus coatings or composite materials added with high-purity, ultra-fine, and high-activity alloy powder can be obtained, which can be applied in various fields including anti-bacterial coatings, weatherproof coatings, camouflage coatings, wave-absorbing coatings, wear-resistant coatings, anti-corrosive coatings, and resin-based composites.

Furthermore, after the wrapping body is removed, the cleaning and drying process of the alloy powder, as well as its mixing with other components of the coatings or composite materials should be carried out in a vacuum or protective atmosphere.

Furthermore, after the wrapping body is removed, the as-prepared alloy powder should be mixed with other components of the coating or composite materials within 20 minutes.

Further preferably, after the wrapping body is removed, the as-prepared alloy powder should be mixed with other components of the coating or composite materials within 5 minutes.

The greatest advantage of the technical proposal involved in the present disclosure is that the purification and the solid solution treatment of the alloy powder are achieved during the formation process of the alloy powder; and the disclosure of metal material composed of high-purity endogenous alloy powder and wrapping body provides a new prospect for the preparation, preservation, and application of high-purity alloy powder.

Supplementary instruction: although the basic concept of selective corrosion is used in the principle of the present disclosure, it is essentially different from the selective corrosion of dealloying method in principle. Specifically, the precursor alloy selected in the dealloying method must be a single amorphous phase, or one or more intermetallic compound phases, or a mixture of one or more intermetallic compounds and amorphous phases. Before the dealloying reaction, the target atoms are uniformly dispersed in the various phases of the alloy in the way of atoms (the target atoms do not aggregate with other target atoms to form a target phase, no matter in the metal compound phase or the amorphous phase); after the dealloying reaction, the active atoms are corroded and removed, the target atoms are free, and aggregate together through re-dispersion and re-arrangement, forming nano-porous structure. Therefore, the product prepared by the dealloying method is usually nanoporous materials, rather than powder materials; and the macroscopic shape of the nanoporous materials remains roughly unchanged before and after the dealloying reaction, that is, an alloy ribbon remains the nanoporous ribbon after the dealloying reaction; and the bulk alloy remains a nanoporous bulk material after the dealloying reaction (Generalized fabrication of nanoporous metals (Au, Pd, Pt, Ag, and Cu) through chemical dealloying, J. Phys Chem C. 113(2009) 12629-12636). Only when the ultrasonic method or otherwise is applied, the as-prepared nanoporous structure can be further crushed into loose nanoporous fragments or nano-particles.

Through a special selection of alloy component pairs, in the present disclosure, the bulk M_{d1}Tₑ₁ raw material and A_{d2}Tₑ₂ raw material are heated above the melting point of the two raw materials, thus obtaining Mₐ₀A_{b0}T_{c0} initial alloy melt. In the solidification process of initial alloy melt, the dispersed particle phase with the major elementary composition of Mₐ₁A_{b1}T_{c1} will precipitate from the melt, and the matrix phase with the major elementary composition of A_{b2}T_{c2} will solidify last and wrap the dispersed particle phase. The dispersed particle phase, if the cooling rate is fast enough, could be nano-particles, if slightly slower, can be sub-micron particles, slower, can be micron particles, and even slower, can be millimeter particles. Therefore, the endogenous Mₐ₁A_{b1}T_{c1} alloy powder in the present disclosure is formed in the solidification process of the initial alloy melt, rather than in the process such as acid reaction removal. The subsequent removal is simply to remove the wrapping body to obtain freely dispersed alloy nano-particles.

Specifically, the beneficial effects of the present disclosure are mainly demonstrated in the following aspects:
Firstly, it makes a breakthrough to prepare high-purity endogenous alloy powder using low-purity raw materials and provides a new way for the preparation of high-purity metal powder from low-purity raw materials, which is of positive significance. The purity of high-purity endogenous alloy powder is improved mainly through the following two mechanisms:
The "absorption" effect of element A on impurity elements. Since the selected element A is a low melting point and high active element compared with element M, it has a stronger affinity for impurity element T compared with M, which makes impurity element T either enter and be solidly dissolved in the matrix phase mainly composed of element A or form slag with element A in the melt state and be separated from the alloy melt; for example, if element A includes rare earth element or Calcium which have a strong affinity for oxygen, this process can be achieved.

In the process of nucleation and growth of the endogenous alloy powder (endogenously precipitated dispersed particle phase), the impurity element will be expelled into the remaining melt. As long as the endogenous alloy powder precipitates not later than the matrix phase during the solidification process, the impurities will be enriched in the melt solidified lastly, that is, the melt is mainly composed of element A and solidified into the matrix phase.

Secondly, in the process of nucleation, growth, and purification of the endogenous Mₐ₁A_{b1}T_{c1} alloy powder, the solid solution alloying of the element A that cannot form intermetallic compounds with M is achieved in the endogenous Mₐ₁A_{b1}T_{c1} alloy powder, and the solid solution alloying of the element A leads to a positive effect.

According to previous research, a significant content of A is often solidly dissolved in the endogenous Mₐ₁A_{b1}T_{c1} alloy powder prepared with raw materials containing a high value of impurity element. The solid solubility of A in endogenous Mₐ₁A_{b1}T_{c1} alloy powder varies according to different main element compositions, impurity content, and solidification rate of the specific alloy melt. For a specific M-A-T alloy melt, in general, if the content of T and the solidification rate of melt are high, and small endogenous alloy powder such as nano-scale powder can be formed, more element A can be solidly dissolved in the endogenous Mₐ₁A_{b1}T_{c1} alloy powder. The solid solution of the element A in the endogenous Mₐ₁A_{b1}T_{c1} alloy powder makes the endogenous alloy powder have some properties of solid solution alloying powder, which is of positive significance.

It should be noted that the solid solution alloying of element A in the endogenous Mₐ₁A_{b1}T_{c1} alloy powder is the result of its corresponding initial alloy melt containing enough element A(most of the remaining element A forms the A_{b2}T_{c2} matrix phase), which is completely different from the case of directly adding a small amount of element A to M to obtain M-A alloy. For example, in the industry, a tiny amount of Y (e.g. 0.3 wt%) will be added to metal Ti (note: the corresponding atomic percentage content of Y is 0.16 at%) to improve the strength and plasticity of Ti-Y alloy. The mechanism is that the tiny amount of Y added into metal Ti usually combines with impurity elements, such as O, to form oxide Y₂O₃. Y₂O₃ can be used as the particle for heterogeneous nucleation to increase the nucleation rate so that finer grains can be obtained in the solidification process of metal Ti, so as to improve the strength and plasticity of metal Ti through the principle of grain refinement.

Such alloying treatment is not a standard alloying in a strict sense, because the tiny amount of Y added to the non-absolutely pure metal Ti is existed as oxide Y₂O₃. The present disclosure can obtain Ti-Y-T alloy melt by melting Ti raw material containing impurity T and Y raw material containing impurity T, which can obtain the endogenous Ti-Y-T alloy powder with a small amount of Y solidly dissolved in the solidified alloy melt, where Y is a standard alloying element in the strict sense of solid solution alloying. This difference endows the endogenous Ti-Y-T alloy powder with significantly different and beneficial application effects. For example, after a wrapping body matrix phase removing process and a spheroidizing treatment, the as-prepared micron Ti-Y-T alloy powder is used in the field of metal 3D printing, in the laser remelting process of the powder, the element Y solidly dissolved in the Ti-Y-T alloy powder can absorb the element O on the surface of Ti-Y-T alloy powder (which is introduced in the process of removing wrapping body matrix phase and spheroidization) and thus to form oxide Y₂O₃.

Taking the oxide Y₂O₃ as the particle for heterogeneous nucleation, the grain size in the Ti-Y-T alloy after laser remelting and solidification can be refined significantly, thus improving the strength and plasticity of the 3D printing devices.

While for the traditional Ti-Y powder prepared by atomization comminuting process, Y in the Ti-Y powder is combined with O to form the oxide Y₂O₃, but new O is introduced into the Ti-Y powder during the atomization comminuting process so that no "free" Y can be further combined with O in the laser remelting process of the Ti-Y powder; or in order to achieve this goal, more Y needs to be added into the traditional Ti-Y alloy powder so that in addition to form oxide Y₂O₃, a few other "free" Y can be solidly dissolved in the Ti-Y alloy powder. There is no doubt that such traditional Ti-Y powder has worse properties than that of the present Ti-Y-T alloy powder that is only solidly dissolved with element Y.

Thirdly, alloy powder mainly composed of mono-crystalline particles can be prepared. Compared with poly-crystalline powder, mono-crystalline powder has many significant and beneficial effects. In the solidification process of the initial alloy melt, each endogenous particle is nucleated from a certain position in the melt and grows according to a specific arrangement of atoms. By controlling the volume percentage content of the matrix phase, and ensuring that each endogenous particle is dispersively distributed, the endogenous particle is difficult to merge and grow. Therefore, the as-prepared endogenous particle phase dispersively distributed is mostly a mono-crystal phase. Even for dendrite particles with a scale up to tens of microns, the growth direction of each secondary dendrite maintains a certain positional relation with the growth direction of the main dendrite, and they still belong to mono-crystalline particles.

For poly-crystalline materials, their grain boundaries tend to contain impurity elements expelled from the crystals during the solidification process, so it is difficult to obtain high-purity poly-crystalline powder materials. When the powder material is mainly composed of mono-crystalline particles, its purity can be guaranteed. Besides, the atoms on the surface of the mono-crystalline particle have a specific arrangement, such as (111)-faced arrangement, which will endow the material with special mechanical, physical, and chemical performances, resulting in beneficial effects.

Fourthly, for the metal material composed of the endogenous powder and the wrapping body, it creatively uses the in situ formed wrapping body to wrap the endogenous alloy powder, thus maintaining high purity and activity of the endogenous alloy powder. The metal or alloy powders prepared by a traditional chemical method or physical method, especially nano-powders with an extremely large specific surface area, are easily oxidized naturally and thus it is difficult to preserve the powder. To solve this problem, after the preparation of the metal material composed of endogenous alloy powder and wrapping body, the wrapping body is not removed immediately, and subsequently, the endogenous alloy powder is tried to be protected in other ways from being contaminated by impurities such as oxygen, but the wrapping body is directly used to protect the endogenous powder from being naturally oxidized. Such metal material composed of the endogenous powder and the wrapping body can be directly used as a raw material for downstream production. When the endogenous powder is needed for downstream production, based on the characteristics of the next working procedure, the endogenous powders are released from the wrapping body in a proper environment at a proper time, and then fed into the next production process in a possible short time, thereby greatly reducing the possibility that the endogenous powders are contaminated by oxygen and other impurities. For example, when the endogenous alloy powders are nano-scale powder, the endogenous alloy powder is composited with resin while being released from the wrapping body or immediately thereafter, so as to prepare a resin-based composite material added with highly active endogenous alloy powders.

Fifthly, by controlling the solidification rate of initial alloy melt, the endogenous alloy powder with different and continuous particle sizes, including nano-scale powder, sub-micron powder, micron powder, and even millimeter-level powder, can be prepared. Compared with the traditional physical or chemical methods using a top-down (crushing bulk into small particles) or a bottom-up (aggregating atoms into large particles) strategy, the "primary crystal particle phase precipitation- dephasing method" in the present disclosure is a new method for preparing powder materials with a particle size from nano-scale to millimeter-level.

Supplementary instruction: in the field of preparation of powder materials, it is easy to prepare nano-scale particles with a size of several nanometers or tens of nanometers through the bottom-up approach (such as ion reduction) from the atomic or ionic scale; and it is easy to prepare micron particles with a size of tens of microns through the top-down approach (such as ball milling crushing). However, it is difficult to prepare powder materials with a size of 1µm either through a bottom-up approach or a top-down approach. Because it is difficult to agglomerate atoms up to 1µm level from the bottom-up approach, and it is also extremely difficult to crush bulk material into 1µm level from the top-down approach. The traditional method for preparing powder material is only suitable for a certain particle size range. For example, preparing nano-scale particles below 100nm by ion reduction, and preparing micron particles above 10µm by atomization comminuting process. However, the method involved in the present disclosure is suitable for preparing powder material from several nanometers to several millimeters, it just needs to control the solidification rate of the initial alloy melt, which perfectly solves the difficulty of preparing powder material with a particle size of about 1µm.

In particular, the present disclosure is particularly suitable for large-scale and low-cost preparation of some special nano-scale metal powders (such as nano-scale Ti powder). Because of the specificity of element Ti, it is difficult or cannot be prepared through chemical reduction, like preparing nano-scale Ag or Cu through the chemical reduction of Ag⁺ and Cu²⁺. Generally, nano-scale Ti powder can only be prepared in small batches by physical methods such as the explosion method, which is extremely high in cost. Even though nano-scale Ti powder is very useful, the cost of thousands of Yuan per kilogram greatly limits its industrial application. The present disclosure ingeniously solves the large-scale and low-cost preparation of high-purity and solid alloyed nano-scale Ti powder through low-purity raw material, which has incalculable value.

Sixthly, supplementary instruction: through careful designing of A-M element combination, using low-purity A and M raw materials, and making use of the thermodynamic effect of element T (O, H, N, P, S, F, and Cl), especially the essential element O, on the diffusion and phase distribution law of the elements A, M and T in the solidification process of M-A-T initial alloy melt, the purification of T in the endogenous M-A-T alloy powder is achieved, and the solid-soluted content of A in the endogenous M-A-T alloy powder is also improved and achieved.

Seventhly, supplementary instruction: M and A described in the present disclosure comprise a pair or pairs of M¹-A¹ element combinations that do not form intermetallic compounds, in order to satisfy this key requirement, the selection of alloy composition should be carefully designed. The solidified structure of the M¹-A¹ element combination does not form M¹-A¹ intermetallic compounds; the A includes at least one of Y, La, Ce, Pr, Nd, Pm, Sm, Eu, Gd, Tb, Dy, Ho, Er, Tm, Yb, Lu, Mg, Ca, Li, Na, K, In, Pb, Zn, and Cu; although the above elements seem to be many, Y, La, Ce, Pr, Nd, Pm, Sm, Eu, Gd, Tb, Dy, Ho, Er, Tm, Yb and Lu are all rare earth elements. If the rare earth elements are represented by RE, A only includes at least one of RE, Mg, Ca, Li, Na, K, In, Pb, Zn, and Cu; among them, RE, Mg, Ca, Li, Na, K, In, Pb and Zn are metal elements that are extremely active, or characterized with a low melting point, or extremely soft, which cannot be used to prepare alloy with other elements to improve the strength or corrosion resistance (the alloy formed by M and A cannot achieve this effect, wherein A is the wrapping body), and are rarely applied in industry, which are unpopular elements for academic research and industrial application. Cu is rarely alloyed with rare noble metals such as Ir, Ru, Re, Os, and Tc, and even if it is alloyed with W, Cr, Mo, V, Ta, and Nb, it usually adopts powder metallurgy method, mixing Cu powder with W, Cr, Mo, V, Ta or Nb powder and sintering to obtain corresponding materials. Therefore, the M¹-A¹ element combinations selected by the present disclosure are unpopular element combinations rarely used in academia and industry. However, the present disclosure finds a new way to turn the disadvantages of the above unpopular element combinations into advantages, and apply them in the field of preparation of powder materials, which is of great creativity.

The present disclosure has skillfully used the characteristics of the above unpopular element combinations, and successfully achieved the preparation of metal material composed of endogenous alloy powder and wrapping body by utilizing the separation of A and M during the solidification process of the alloy, and that the primary crystal particle mainly composed of M precipitating first and the matrix phase mainly composed of A precipitating later. The elements such as RE, Mg, Ca, Li, Na, K, In, Pb and Zn are extremely active, or characterized by low melting point, or extremely soft, which provides convenience for the removal of the wrapping body mainly composed of these elements. Therefore, the preparation of a category of alloy powder by using unpopular element combinations is of positive significance.

Therefore, the present disclosure creatively uses low-purity raw materials and combines several beneficial technical schemes such as the generation of mono-crystalline alloy powder, purification and preservation of alloy powder, and solid solution alloying of powder. And the present disclosure has facilitated the preparation of high-purity nanometer, sub-micron, micron, and millimeter solid solution alloy powder, which has a good application prospect in catalysis, powder metallurgy, composite materials, magnetic materials, sterilization, metal injection molding, metal powder 3D printing, coatings, and composite materials.

### BRIEF DESCRIPTION OF THE DRAWINGS

Figure 1 shows the local back-scattering SEM of the endogenous nano-scale Ti alloy powder and Gd wrapping body in Example 3 of the present disclosure;
Figure 2 shows the SEM of the nano-scale Ti alloy powder in Example 3 of the present disclosure;
Figure 3 shows the local back-scattering SEM of the endogenous Ti-Co dendrite alloy powder and Gd wrapping body in Example 6 of the present disclosure;
Figure 4 shows the SEM of the Ti-Co dendrite alloy powder in Example 6 of the present disclosure.

### DETAILED DESCRIPTION

The present disclosure is described in detail below, together with Examples. It should be noted that the following examples are intended to facilitate the understanding of the present disclosure, and will not confine the present disclosure in any way.

### Example 1

This example provides a metal ribbon composed of endogenous nano-scale Ti alloy powder and Ce wrapping body, a nano-scale Ti alloy powder, and their preparation method and application, which includes the following steps:
Low-purity titanium including Cl, N, O, and H with a weight percentage content of 0.3 wt%, 0.1 wt%, 0.3 wt%, and 0.03 wt%, respectively, is selected. After converting into atomic percentage content, atomic percentage content of Cl, N, O, and H are 0.4 at%, 0.33 at%, 0.88 at%, and 1.39 at%, respectively, that is, their total content is 3 at%. Low-purity rare earth Ce which contains 0.3 wt% of O is selected. After converting into atomic percentage content, the content of O in Ce is 2.57 at%. Since Ti-Ce is an element pair that does not form an intermetallic compound, and the melting point of Ti is higher than that of Ce, thus Ti alloy powder can be prepared based on the Ti-Ce element pair.

The low-purity Ti and low-purity Ce raw materials with a volume ratio of 1:3 are mixed, and other trace elements that may exist in the raw materials are classified as the main element to facilitate the calculation. According to the element density and atomic weight data, the composition of the alloy raw materials can be expressed as (Ti₉₇Cl_{0.4}N_{0.33}O_{0.88}H_{1.39})₃₉(Ce_{97.43}O_{2.57})₆₁ in terms of atomic percentage content, which can be further expressed as Ti_{37.83}Ce_{59.435}Cl_{0.156}N_{0.129}H_{0.54}O_{1.91}, wherein the total content of impurity element T such as Cl, N, H, and O is about 2.735 at%.

The low-purity alloy raw materials are melted by induction, and an initial alloy melt with a composition of Ti_{37.83}Ce_{59.435}T_{2.735} (wherein T represents impurity elements such as Cl, N, H, and O) is obtained. Some impurity elements in the initial alloy melt may become slag and separate from the melt, resulting in the decrease of the impurity content; and some impurities in the environment and atmosphere, such as oxygen, may enter into the melt, increasing the impurity content.

The initial alloy melt is solidified into the ribbons with a thickness of about 100µm through copper roller spinning. In the solidification process, the dispersed particle phase mainly composed of Ti precipitates into the matrix phase mainly composed of Ce, thus the metal ribbon composed of endogenous nano-scale Ti alloy powder and Ce wrapping body can be obtained. Wherein atomic percentage composition of the endogenous Ti alloy powder is about Ti_{99.1}Ce_{0.5}T_{0.4}, which is mainly composed of mono-crystalline particles with a particle size ranging from 3nm to 300nm. A small amount of Ce is solidly dissolved in the endogenous Ti alloy powder, and the content of impurity T is greatly reduced compared with the low-purity Ti raw materials, and a large amount of impurity T is enriched in the Ce wrapping body. In the as-prepared metal ribbon composed of endogenous nano-scale Ti alloy powder and Ce wrapping body, the volume percentage content of the endogenous Ti alloy powder is equivalent to the volume percentage content of the Ti raw materials when the raw materials are prepared, which is about 25 vol%, thus ensuring the dispersed distribution of the Ti alloy powder in the matrix phase mainly composed of Ce.

The Ce wrapping body in the metal ribbon is composed of endogenous nano-scale Ti alloy powder and the Ce wrapping body is removed by dilute hydrochloride acid solution. Since Ti alloy powder does not react with dilute hydrochloride acid, after separation, cleaning, and drying, Ti-Ce-T alloy powder can be obtained. Because of the absorption of impurities such as oxygen by the surface atoms after the exposure of Ti-Ce-T alloy powder, the content of impurity T in the obtained Ti-Ce-T alloy powder is higher than that of the endogenous Ti-Ce-T alloy powder.

The process of step (5) can also be carried out directly after step (3):

The Ce wrapping body in the metal ribbon composed of endogenous nano-scale Ti alloy powder and Ce wrapping body is removed by diluted deoxygenated hydrochloride acid solution, then the Ti alloy powder is separated under a protective atmosphere and subsequently mixed with epoxy resin and other coating components within 20 minutes, then nano-scale titanium-alloy-modified polymer anti-corrosive coating can be prepared.

### Example 2

This example provides a metal sheet composed of endogenous micron Ti alloy powder and Ce wrapping body, a micron Ti alloy powder, and their preparation method and application, which includes the following steps:
Low-purity titanium including Cl, N, O, and H with a weight percentage content of 0.3 wt%, 0.1 wt%, 0.3 wt%, and 0.03 wt% respectively, is selected. After converting into atomic percentage content, atomic percentage content of Cl, N, O, and H are 0.4 at%, 0.33 at%, 0.88 at%, and 1.39 at%, respectively, that is, their total content is 3 at%. Low-purity rare earth Ce which contains 0.3 wt% of O is selected. After converting into atomic percentage content, the content of O in Ce is 2.57 at%. Since Ti-Ce is an element pair that does not form an intermetallic compound, and the melting point of Ti is higher than that of Ce, thus Ti alloy powder can be prepared based on the Ti-Ce element pair.

The low-purity Ti and low-purity Ce raw materials with a volume ratio of 1:3 are mixed, and other trace elements that may exist in the raw materials are classified as the main element to facilitate the calculation. According to the element density and atomic weight data, the composition of the alloy raw materials can be expressed as (Ti₉₇Cl_{0.4}N_{0.33}O_{0.88}H_{1.39})₃₉(Ce_{97.43}O_{2.57})₆₁ in terms of atomic percentage content, which can be further expressed as Ti_{37.83}Ce_{59.435}Cl_{0.156}N_{0.129}H_{0.54}O_{1.91}, wherein the total content of impurity element T such as Cl, N, H, and O is about 2.735 at%.

The low-purity alloy raw materials are melted by induction, and an initial alloy melt with a composition of Ti_{37.83}Ce_{59.435}T_{2.735} (wherein T represents impurity elements such as Cl, N, H, and O) is obtained. Some impurity elements in the initial alloy melt may become slag and separate from the melt, resulting in the decrease of the impurity content; and some impurities in the environment and atmosphere, such as oxygen, may enter into the melt, increasing the impurity content.

The initial alloy melt is solidified into the sheet with a thickness of about 4mm. In the solidification process, the dispersed dendritic particle phase mainly composed of Ti precipitates into the matrix phase mainly composed of Ce, thus the metal sheet composed of endogenous micron Ti alloy powder and Ce wrapping body can be obtained. Wherein atomic percentage composition of the dendritic endogenous Ti alloy powder is about Ti_{99.4}Ce_{0.3}T_{0.3}, which is mainly composed of mono-crystalline particles with a particle size ranging from 1µm to 150µm. A small amount of Ce is solidly dissolved in the endogenous Ti alloy powder, and the content of impurity T is greatly reduced compared with the low-purity Ti raw materials, and a large amount of impurity T is enriched in the Ce wrapping body. In the as-prepared metal sheet composed of endogenous micron Ti alloy powder and Ce wrapping body, the volume percentage content of the endogenous Ti alloy powder is equivalent to the volume percentage content of the Ti raw materials when the raw materials are prepared, which is about 25 vol%, thus ensuring the dispersed distribution of the dendritic Ti alloy powder in the matrix phase mainly composed of Ce.

The Ce wrapping body in the metal sheet is composed of endogenous micron Ti alloy powder and the Ce wrapping body is removed by dilute hydrochloride acid solution. Since dendritic Ti alloy powder does not react with dilute hydrochloride acid, after separation, cleaning, and drying, dendritic Ti-Ce-T alloy powder can be obtained.

The Ti-Ce-T alloy dendrite powder is treated with a jet mill, and the entangled dendritic particles are dispersed and the relatively large dendritic particles can be rushed into small dendritic particles.

The obtained dendritic Ti alloy powder is screened and the dendritic Ti alloy dendrite powder with a particle size ranging from 15µm to 53µm is selected for plasma spheroidization, thus spherical or sub-spherical Ti alloy powder with a particle size nearly unchanged can be obtained.

The spherical or sub-spherical Ti alloy powder can be applied in the field of metal powder 3D printing.

### Example 3

This example provides a metal ribbon composed of endogenous nano-scale Ti alloy powder and Gd wrapping body, a nano-scale Ti alloy powder, and their preparation method, which includes the following steps:
Low-purity Ti raw material and rare earth raw material mainly composed of Gd are selected. The content of impurity T in both two kinds of raw materials is about 3 at%. Since Ti-Gd is an element pair that does not form an intermetallic compound, and the melting point of Ti is higher than that of Gd, thus Ti alloy powder can be prepared based on the Ti-Gd element pair.

The low-purity Ti raw material and rare earth raw material mainly composed of Gd with a volume ratio of 15:85 are mixed and melted by induction, thus an initial alloy melt with the composition of Ti₂₄Gd₇₃T₃ can be obtained, wherein the content of T is about 3 at%.

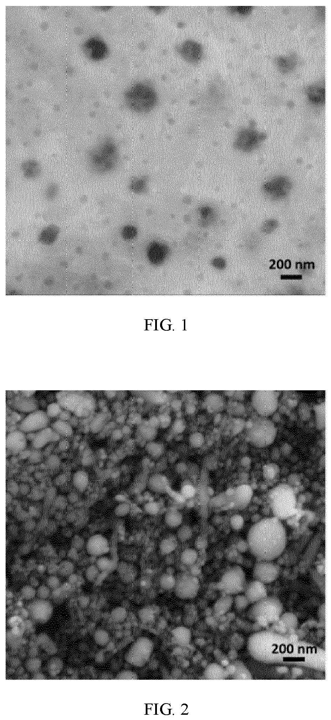

The initial alloy melt is solidified into the ribbon with a thickness of about 100µm through copper roller spinning. In the solidification process, the dispersed particle phase mainly composed of Ti precipitates into the matrix phase mainly composed of Gd, thus the metal ribbon composed of endogenous nano-scale Ti alloy powder and Gd wrapping body can be obtained. The micromorphology of the metal ribbon is shown in Figure 1. Wherein atomic percentage composition of the endogenous Ti alloy powder is about Ti_{99.2}Gd_{0.5}T_{0.3}, which is mainly composed of nano-scale mono-crystalline Ti particles with a small amount of solidly dissolved Gd. The particle size of the nano-scale mono-crystalline Ti particles ranges from 3nm to 300nm. The content of impurity T is greatly reduced compared with the low-purity Ti raw materials, and a large amount of impurity T is enriched in the Gd wrapping body. In the as-prepared metal ribbon composed of endogenous Ti alloy powder and Gd wrapping body, the volume percentage content of the endogenous Ti alloy powder is equivalent to the volume percentage content of the Ti raw materials when the raw materials are prepared, which is about 15 vol%, thus ensuring the dispersed distribution of the Ti alloy powder in the matrix phase mainly composed of Gd, as shown in Figure 1.

The Gd wrapping the body in the metal ribbon is composed of endogenous nano-scale Ti alloy powder and Gd wrapping body is removed by a dilute hydrochloride acid solution. Since Ti alloy powder does not react with dilute hydrochloride acid, after separation, cleaning, and drying, Ti-Gd-T alloy powder mainly composed of Ti can be obtained, of which the particle size ranges from 3nm to 300nm, as shown in Figure 2.

### Example 4

This example provides a metal ribbon composed of endogenous nano-scale Ti-Nb-V alloy powder and Ce-La-Nd-Pr wrapping body, a nano-scale Ti-Nb-V alloy powder, and their preparation method, which includes the following steps:
Low-purity Ti, Nb, and V raw materials and rare earth raw materials mainly composed of Ce, La, Nd, and Pr are selected. The content of impurity T in both kinds of raw materials is about 3 at%. Since Ti-Ce, Ti-La, Ti-Nd, Ti-Pr, Nb-Ce, Nb-La, Nb-Nd, Nb-Pr, V-Ce, V-La, V-Nd, and V-Pr are element pairs that do not form intermetallic compounds, and the melting point of Ti, Nb, and V is higher than that of Ce, La, Nd, and Pr, thus Ti-Nb-V alloy powder can be prepared based on these element combination pairs.

The low-purity Ti, Nb, and V raw materials and rare earth raw materials mainly composed of Ce, La, Nd, and Pr with a volume ratio of 1:2 are mixed, wherein the Ti, Nb, and V are with equal molar ratios. The alloy raw materials are melted by induction, and thus an initial alloy melt with the composition of (Ti-Nb-V)-(Ce-La-Nd-Pr)-T can be obtained, wherein the content of T is about 3 at%.

The initial alloy melt is solidified into the ribbon with a thickness of about 100µm through copper roller spinning. In the solidification process, the dispersed particle phase mainly composed of Ti-Nb-V precipitates into the matrix phase mainly composed of Ce-La-Nd-Pr, thus the metal ribbon composed of endogenous nano-scale Ti-Nb-V alloy powder and Ce-La-Nd-Pr wrapping body can be obtained. Wherein atomic percentage composition of the endogenous Ti-Nb-V alloy powder is about (Ti-Nb-V)_{99.2}(Ce-La-Nd-Pr)_{0.5}T_{0.3}, which is mainly composed of mono-crystalline Ti-Nb-V particles with ultimate mutual solubility. The particle size of the mono-crystalline Ti-Nb-V particles ranges from 3nm to 300nm. Ce-La-Nd-Pr is solidly dissolved in the endogenous Ti-Nb-V alloy powder, and the content of impurity T is greatly reduced compared with the low-purity Ti, Nb, and V raw materials, and a large amount of impurity T is enriched in the Ce-La-Nd-Pr wrapping body. In the as-prepared metal ribbon composed of endogenous nano-scale Ti-Nb-V alloy powder and Ce-La-Nd-Pr wrapping body, the volume percentage content of the endogenous Ti-Nb-V alloy powder is equivalent to the volume percentage content of the Ti, Nb, and V raw materials when the raw materials are prepared, which is about 33 vol%, thus ensuring the dispersed distribution of the Ti-Nb-V alloy powder in the matrix phase mainly composed of Ce-La-Nd-Pr.

The Ce-La-Nd-Pr wrapping body in the metal ribbon composed of endogenous nano-scale Ti-Nb-V alloy powder and Ce-La-Nd-Pr wrapping body is removed by dilute hydrochloride acid solution. Since Ti-Nb-V alloy powder does not react with dilute hydrochloride acid, after separation, cleaning and drying, Ti-Nb-V alloy powder mainly composed of (Ti-Nb-V)-(Ce-La-Nd-Pr)-T can be obtained. Because of the absorption of impurities such as oxygen by the surface atoms after the exposure of Ti-Nb-V alloy powder, the content of impurity T in the as-prepared Ti-Nb-V alloy powder is higher than that of the endogenous Ti-Nb-V alloy powder.

### Example 5

This example provides a metal ribbon composed of endogenous sub-micron Ti-Co alloy powder and Ce-La-Nd-Pr wrapping body, a sub-micron Ti-Co alloy powder, and their preparation method, which includes the following steps:
Low-purity Ti and Co raw materials and rare earth raw materials mainly composed of Ce, La, Nd, and Pr are selected, wherein the molar ratio of Ti and Co raw materials is 1:1. The content of impurity T in both two kinds of raw materials is about 3 at%. Since Ti-Ce, Ti-La, Ti-Nd, and Ti-Pr are element pairs that do not form intermetallic compounds, and Ti accounts for 50% of the Ti-Co raw materials, which is the main element; and the melting point of CoTi intermetallic compound is as high as 1700°C, which is much higher than the melting point of the intermetallic compounds can be formed by Co and Ce, La, Nd, and Pr; when Co:Ti is 1: 1, Co mainly combines with Ti to form CoTi intermetallic compound with a high melting point. Therefore, intermetallic compound CoTi alloy powder can be prepared on the basis of these element combination pairs.

The low-purity Ti and Co raw material and rare earth raw material mainly composed of Ce, La, Nd, and Pr with a volume ratio of 1:2 are mixed, wherein Co:Ti is 1:1. The alloy raw materials are melted by induction, and thus an initial alloy melt with the composition of (Ti-Co)-(Ce-La-Nd-Pr)-T can be obtained, wherein the content of T is about 3 at%.

The initial alloy melt is solidified into the ribbon with a thickness of about 300µm through copper roller spinning. In the solidification process, the dispersed particle phase mainly composed of sub-micron Ti-Co precipitates into the matrix phase mainly composed of Ce-La-Nd-Pr, thus the metal ribbon composed of endogenous sub-micron Ti-Co alloy powder and Ce-La-Nd-Pr wrapping body can be obtained. Wherein atomic percentage composition of the endogenous Ti-Co alloy powder is about (Ti-Co)₉₉(Ce-La-Nd-Pr)_{0.6}T_{0.4}, which is mainly composed of mono-crystalline Ti-Co intermetallic compound particles with a particle size ranging from 20nm to 1µm. Ce-La-Nd-Pr is solidly dissolved in the endogenous Ti-Co alloy powder, and the content of impurity T is greatly reduced compared with the low-purity Ti and Co raw materials, and a large amount of impurity T is enriched in the Ce-La-Nd-Pr wrapping body. In the as-prepared metal ribbon composed of endogenous sub-micron Ti-Co alloy powder and Ce-La-Nd-Pr wrapping body, the volume percentage content of the endogenous Ti-Co alloy powder is equivalent to the volume percentage content of the Ti and Co raw materials when the raw materials are prepared, which is about 33 vol%, thus ensuring the dispersed distribution of the Ti-Co alloy powder in the matrix phase mainly composed of Ce-La-Nd-Pr.

The Ce-La-Nd-Pr wrapping body in the metal ribbon is composed of endogenous sub-micron Ti-Co alloy powder and Ce-La-Nd-Pr wrapping body is removed by dilute hydrochloride acid solution. Since Ti-Co alloy powder does not react with dilute hydrochloride acid, after separation, cleaning, and drying, Ti-Co alloy powder mainly composed of (Ti-Co)-(Ce-La-Nd-Pr)-T can be obtained. Because of the absorption of impurities such as oxygen by the surface atoms after the exposure of Ti-Co alloy powder, the content of impurity T in the as-prepared Ti-Co alloy powder is higher than that of the endogenous Ti-Co alloy powder.

### Example 6

This example provides a metal sheet composed of endogenous micron Ti-Co alloy powder and Gd wrapping body, a micron Ti-Co alloy powder, and their preparation method, which includes the following steps:
Low-purity Ti and Co raw materials and rare earth raw materials mainly composed of Gd are selected, wherein the molar ratio of Ti and Co raw materials is 1:1. The content of impurity T in both two kinds of raw materials is about 3 at%. Since Ti-Gd is an element pair that does not form intermetallic compounds, and Ti accounts for 50% of the Ti-Co raw materials, which is the main element; and the melting point of CoTi intermetallic compound is as high as 1700°C, which is much higher than the melting point of the intermetallic compounds can be formed by Co and Gd; when Co:Ti is 1:1, Co mainly combines with Ti to form CoTi intermetallic compound with a high melting point. Therefore, intermetallic compound CoTi alloy powder can be prepared on the basis of these element combination pairs.

The low-purity Ti and Co raw material and rare earth raw material mainly composed of Gd with a volume ratio of 30:70 are mixed, wherein Co:Ti is 1:1. The alloy raw materials are melted by induction, and thus an initial alloy melt with the composition of (Ti-Co)-Gd-T can be obtained, wherein the content of T is about 3 at%.

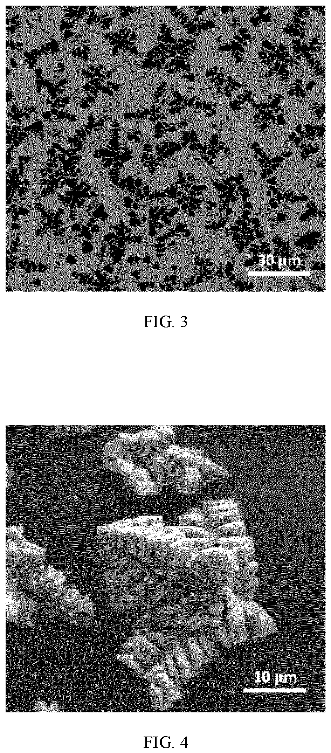

The initial alloy melt is solidified into the sheet with a thickness of about 2mm. In the solidification process, the dispersed dendritic particle phase mainly composed of Ti-Co precipitates into the matrix phase mainly composed of Gd, thus the metal sheet composed of endogenous micron Ti-Co alloy powder and Gd wrapping body can be obtained. The micromorphology of the metal sheet is shown in Figure 3. Wherein atomic percentage composition of the dendritic endogenous Ti-Co alloy powder is about (TiCo)_{99.5}Gd_{0.3}T_{0.2}, which is mainly composed of mono-crystalline Ti-Co intermetallic compound particles with a particle size ranging from 1µm to 60µm. A small amount of Gd is solidly dissolved in the endogenous Ti-Co alloy powder, and the content of impurity T is greatly reduced compared with the low-purity Ti and Gd raw materials, and a large amount of impurity T is enriched in the Gd wrapping body. In the as-prepared metal sheet composed of endogenous micron Ti-Co alloy powder and Gd wrapping body, the volume percentage content of the endogenous Ti-Co alloy powder is equivalent to the volume percentage content of the Ti and Co raw materials when the raw materials are prepared, which is about 30 vol%, thus ensuring the dispersed distribution of the Ti-Co alloy powder in the matrix phase mainly composed of Gd.

The Gd wrapping body in the metal sheet is composed of endogenous micron Ti-Co alloy powder and the Gd wrapping body is removed by dilute hydrochloride acid solution. Since Ti-Co alloy powder does not react with dilute hydrochloride acid, after separation, cleaning and drying, Ti-Co alloy powder mainly composed of (Ti-Co)-Gd-T can be obtained, of which the mono-crystalline dendrite morphology is shown in Figure 4. Because of the absorption of impurities such as oxygen by the surface atoms after the exposure of Ti-Co alloy powder, the content of impurity T in the as-prepared Ti-Co alloy powder is higher than that of the endogenous Ti-Co alloy powder.

### Example 7

This example provides a metal ribbon composed of endogenous micron Fe alloy powder and La wrapping body, a micron Ti alloy powder, and their preparation method, which includes the following steps:
Low-purity Fe raw material and rare earth raw material mainly composed of La are selected. The content of impurity T in both two kinds of raw materials is about 2.5 at%. Since Fe-La is an element pair that does not form intermetallic compounds, and both Fe and La are the main elements; Therefore, Fe alloy powder can be prepared on the basis of a Fe and La combination pair.

The low-purity Fe raw material and rare earth raw material mainly composed of La with a volume ratio of 1:2 are mixed and melted by induction. Thus an initial alloy melt with the composition of Fe-La-T can be obtained, wherein the content of T is about 2.5 at%.

The initial alloy melt is solidified into the ribbon with a thickness of about 500µm through copper roller spinning. In the solidification process, the dispersed particle phase mainly composed of Fe precipitates into the matrix phase mainly composed of La, thus the metal ribbon composed of endogenous micron Fe alloy powder and La wrapping body can be obtained. Wherein atomic percentage composition of the endogenous Fe alloy powder is about Fe_{99.4}La_{0.3}T_{0.3}, which is mainly composed of mono-crystalline Fe particles with a particle size ranging from 500nm to 5µm. La is solidly dissolved in the endogenous Fe alloy powder, and the content of impurity T in endogenous Fe alloy powder is greatly reduced compared with the low-purity Fe raw materials, and a large amount of impurity T is enriched in the La wrapping body. In the as-prepared metal ribbon composed of endogenous micron Fe alloy powder and La wrapping body, the volume percentage content of the endogenous Fe alloy powder is equivalent to the volume percentage content of the Fe raw material when the raw materials are prepared, which is about 33 vol%, thus ensuring the dispersed distribution of the Fe alloy powder in the matrix phase mainly composed of La.

The endogenous Fe alloy powder is pre-separated from the oxidized La matrix through a natural oxidation-pulverization process of the La wrapping body, and the Fe alloy powder can be separated from the oxidized La matrix with a magnetic field based on the magnetic property of the Fe alloy powder. Then the residual La oxide adsorbed on the surface of the Fe alloy powder can be completely removed by a small amount of dilute acid solution, meanwhile, ensuring the Fe alloy powder can be retained by controlling the concentration and amount of the acid. After cleaning, separation, and drying, Fe alloy powder is obtained.

### Example 8

This example provides a metal ribbon composed of endogenous nano-scale Cu alloy powder and Li wrapping body, a nano-scale Cu alloy powder, and their preparation method, which includes the following steps:
Low-purity Cu raw material and Li raw material are selected. The content of impurity T in both two kinds of raw materials is about 1 at%. Since Cu-Li is an element pair that does not form intermetallic compounds, and both Cu and Li are the main elements; Therefore, Cu alloy powder can be prepared on the basis of a Cu and Li combination pair.

The low-purity Cu raw material and low-purity Li raw material with a volume ratio of 1:3 are mixed and melted by induction. Thus an initial alloy melt with the composition of Cu-Li-T can be obtained, wherein the content of T is about 1 at%.

The initial alloy melt is solidified into the ribbon with a thickness of about 30µm through copper roller spinning. In the solidification process, the dispersed particle phase mainly composed of Cu precipitates into the matrix phase mainly composed of Li, thus the metal ribbon composed of endogenous nano-scale Cu alloy powder and Li wrapping body can be obtained. Wherein atomic percentage composition of the endogenous Cu alloy powder is about Cu_{84.8}Li₁₅T_{0.2}, which is mainly composed of mono-crystalline Cu alloy particles solidly dissolved with a large amount of Li. The particle size of the mono-crystalline Cu alloy particles ranges from 3nm to 150nm. The content of impurity T in endogenous Cu alloy powder is greatly reduced compared with the Cu raw materials, and a large amount of other impurity T is enriched in the Li wrapping body.

The Li wrapping body in the metal ribbon is composed of endogenous nano-scale Cu alloy powder and the Li wrapping body is removed by a very dilute hydrochloride acid solution. Since Cu alloy powder does not react with very dilute hydrochloride acid, after separation, cleaning and drying, nano-scale Cu alloy powder mainly composed of Cu-Li-T can be obtained.

### Example 9

This example provides a metal ribbon composed of endogenous nano-scale Cu alloy powder and Pb wrapping body, a nano-scale Cu alloy powder, and their preparation method, which includes the following steps:
Low-purity Cu raw material and Pb raw material are selected. The content of impurity T in both two kinds of raw materials is about 2 at% and 0.5 at%, respectively. Since Cu-Pb is an element pair that does not form intermetallic compounds, and both Cu and Pb are the main elements; Therefore, Cu alloy powder can be prepared on the basis of a Cu and Pb combination pair.

The low-purity Cu raw material and low-purity Pb raw material with a volume ratio of 1:3 are mixed and melted by induction. Thus an initial alloy melt with the composition of Cu-Pb-T can be obtained, wherein the content of T is about 1 at%.

The initial alloy melt is solidified into the ribbon with a thickness of about 30µm through copper roller spinning. In the solidification process, the dispersed particle phase mainly composed of Cu precipitates into the matrix phase mainly composed of Pb, thus the metal ribbon composed of endogenous nano-scale Cu alloy powder and Pb wrapping body can be obtained. Wherein atomic percentage composition of the endogenous Cu alloy powder is about Cu_{99.5}Pb_{0.3}T_{0.2}, which is mainly composed of mono-crystalline Cu alloy particles solidly dissolved with a small amount of Pb. The particle size of the mono-crystalline Cu alloy particles ranges from 3nm to 150nm. The content of impurity T in endogenous Cu alloy powder is greatly reduced compared with the Cu raw materials, and a large amount of other impurity T is enriched in the Pb wrapping body. In the as-prepared metal ribbon composed of endogenous nano-scale Cu alloy powder and Pb wrapping body, the volume percentage content of the endogenous Cu alloy powder is equivalent to the volume percentage content of the Cu raw material when the raw materials are prepared, which is about 25 vol%, thus ensuring the dispersed distribution of the Cu alloy powder in the matrix phase mainly composed of Pb.

The Pb wrapping body in the metal ribbon is composed of endogenous nano-scale Cu alloy powder and Pb wrapping body is removed by the mixture of acetic acid and dilute hydrochloride acid. Since Cu alloy powder does not react with the mixture of acetic acid and dilute hydrochloride acid, after separation, cleaning and drying, nano-scale Cu alloy powder mainly composed of Cu-Pb-T can be obtained.

### Example 10

This example provides a metal ribbon composed of endogenous nano-scale Nb-V-Mo-W alloy powder and Cu wrapping body, a nano-scale Nb-V-Mo-W alloy powder, and their preparation method, which includes the following steps:
Low-purity Nb, V, Mo, and W raw materials and Cu raw materials are selected. The content of impurity T in both two kinds of raw materials is about 1 at%. Since Cu-Nb, Cu-V, Cu-Mo, and Cu-W are element combination pairs that do not form intermetallic compounds, and Nb, V, Mo, and W are the main mutually soluble elements. Therefore, Nb-V-Mo-W alloy powder can be prepared on the basis of these element combination pairs.

The low-purity Nb, V, Mo, and W raw material and Cu raw material 1 with a volume ratio of 1:2 are mixed, wherein the molar ratio of Nb:V:Mo:W is 2:1:1:1. The alloy raw materials are melted by induction, and thus an initial alloy melt with the composition of (Nb₂VMoW)-Cu-T can be obtained, wherein the content of T is about 1 at%.

The initial alloy melt is solidified into the ribbon with a thickness of about 30µm through copper roller spinning. In the solidification process, the dispersed particle phase mainly composed of Nb₂VMoW precipitates into the matrix phase mainly composed of Cu, thus the metal ribbon composed of endogenous nano-scale Nb₂VMoW alloy powder and Cu wrapping body can be obtained. Wherein atomic percentage composition of the endogenous Nb₂VMoW alloy powder is about (Nb₂VMoW)_{99.3}Cu_{0.5}T_{0.2}, which is mainly composed of high-entropy mono-crystalline Nb₂VMoW alloy particles solidly dissolved with a small amount of Cu. The particle size of the high-entropy mono-crystalline Nb₂VMoW alloy particles ranges from 3nm to 200nm. The content of impurity T in endogenous Nb₂VMoW alloy powder is greatly reduced compared with the Nb, V, Mo, and W raw materials, and a large amount of other impurity T is enriched in the Cu wrapping body. In the as-prepared metal ribbon composed of endogenous nano-scale Nb-V-Mo-W alloy powder and Cu wrapping body, the volume percentage content of the endogenous Nb₂VMoW alloy powder is equivalent to the volume percentage content of the Nb, V, Mo, and W raw material when the raw materials are prepared, which is about 33 vol%, thus ensuring the dispersed distribution of the Nb₂VMoW alloy powder in the matrix phase mainly composed of Cu.

The Cu wrapping body in the metal ribbon is composed of endogenous nano-scale Nb-V-Mo-W alloy powder and Cu wrapping body is removed by hydrochloride acid solution with medium concentration. Since Nb₂VMoW alloy powder does not react with hydrochloride acid solution with medium concentration, after separation, cleaning, and drying, nano-scale alloy powder mainly composed of Nb₂VMoW can be obtained.

### Example 11

This example provides a metal ribbon composed of endogenous micro Nb-V-Mo-W alloy powder and Cu wrapping body, a micro Nb-V-Mo-W alloy powder, and their preparation method, which includes the following steps:
Low-purity Nb, V, Mo, and W raw materials and Cu raw materials are selected. The content of impurity T in both two kinds of raw materials is about 1 at%. Since Cu-Nb, Cu-V, Cu-Mo, and Cu-W are element combination pairs that do not form intermetallic compounds, and Nb, V, Mo, and W are the main mutually soluble elements. Therefore, Nb-V-Mo-W alloy powder can be prepared on the basis of these element combination pairs.

The low-purity Nb, V, Mo, and W raw material and Cu raw material 1 with a volume ratio of 1:2 are mixed, wherein the molar ratio of Nb:V:Mo:W is 1:1:1:1. The alloy raw materials are melted by induction, and thus an initial alloy melt with the composition of (NbVMoW)-Cu-T can be obtained, wherein the content of T is about 1 at%.

The initial alloy melt is solidified into the sheet with a thickness of about 4mm. In the solidification process, the dispersed dendritic particle phase mainly composed of NbVMoW precipitates into the matrix phase mainly composed of Cu, thus the metal sheet composed of endogenous micro NbVMoW alloy powder and Cu wrapping body can be obtained. Wherein atomic percentage composition of the endogenous NbVMoW dendritic alloy powder is about (NbVMoW)_{99.6}Cu_{0.3}T_{0.1}, which is mainly composed of high-entropy mono-crystalline NbVMoW alloy particles solidly dissolved with a small amount of Cu. The particle size of the high-entropy mono-crystalline NbVMoW alloy particles ranges from 3nm to 200nm. The content of impurity T in endogenous NbVMoW alloy powder is greatly reduced compared with the Nb, V, Mo and W raw materials, and a large amount of other impurity T is enriched in the Cu wrapping body. In the as-prepared metal sheet composed of endogenous micro Nb-V-Mo-W alloy powder and Cu wrapping body, the volume percentage content of the endogenous NbVMoW dendritic alloy powder is equivalent to the volume percentage content of the Nb, V, Mo, and W raw material when the raw materials are prepared, which is about 33 vol%, thus ensuring the dispersed distribution of the NbVMoW dendritic alloy powder in the matrix phase mainly composed of Cu.

The Cu wrapping body in the metal sheet is composed of endogenous micro Nb-V-Mo-W alloy powder and Cu wrapping body is removed by hydrochloride acid solution with medium concentration. Since NbVMoW dendritic alloy powder does not react with hydrochloride acid solution with medium concentration, after separation, cleaning, and drying, nano-scale alloy powder mainly composed of NbVMoW can be obtained.

The technical features of the above examples may be arbitrarily combined. For conciseness, all possible combinations of the technical features of the above embodiments have not been completely described. However, as long as there is no contradiction between the combinations of these technical features, they shall be considered to be within the scope of the present disclosure.

The above examples only express several embodiments of the disclosure, and their descriptions are more specific and detailed, but they cannot be interpreted as a limitation on the scope of the present disclosure. It should be noted that for one of ordinary skill in the art, several variations and improvements may be made without deviating from the concept of the disclosure, which all fall within the scope of protection of the disclosure. Therefore, the scope of protection of the present disclosure shall be subject to the attached claims.

## Claims

1. A method for preparing a metal material composed of endogenous alloy powder and wrapping body, which is prepared by the following steps:
at step 1: melting initial alloy melt with the main elementary composition of Mₐ₀A_{b0}T_{c0}, wherein a0, b0, and c0 represent the atomic percent contents of corresponding constituent elements respectively, and a0+b0+c0=100%, and 0<c0≤15%;
at step 2: solidifying the Mₐ₀A_{b0}T_{c0} initial alloy melt into a solid state, thus obtaining dispersed Mₐ₁A_{b1}T_{c1} particle phase endogenously precipitated from the melt and A_{b2}T_{c2} matrix phase wrapping the dispersed particles, the as-obtained solid material is the metal material composed of endogenous alloy powder and wrapping body; among which 0<c1<c0<c2, it means that the content of element T in the Mₐ₀A_{b0}T_{c0} initial alloy melt is higher than that in the dispersed Mₐ₁A_{b1}T_{c1} particle phase, but lower than that in the A_{b2}T_{c2} matrix phase;
the metal material composed of endogenous alloy powder and wrapping body is prepared by solidification of the alloy melt, and the structure of the metal material includes the dispersed particle phase endogenously precipitated during the solidification of the initial alloy and the matrix phase wrapping the dispersed particles, which correspond to the endogenous alloy powder and the wrapping body, respectively; the major elementary composition of the endogenous alloy powder is Mₐ₁A_{b1}T_{c1}, and the major elementary composition of the wrapping body is A_{b2}T_{c2};
both M and A contain one or more metal elements, T is the impurity element including oxygen, a1, b1, c1, b2, c2 represent the atomic percentage contents of the corresponding element respectively, and a1+b1+c1=100%, b2+c2=100%, c2>c1>0, b1>0; the melting point of the endogenous alloy powder is higher than that of the wrapping body; the endogenous Mₐ₁A_{b1}T_{c1} alloy powder contain element A in solid solution.
the M and A comprise a pair or pairs of M¹-A¹ element combinations that will not form corresponding intermetallic compounds, wherein M¹ represents any single element in M and A¹ represents any single element in A, and the main elements in M is composed of each M¹ element that satisfy the combination conditions of M¹-A¹, and the main elements in A is composed of each A¹ element that satisfy the combination conditions of M¹-A¹, so that the metal material composed of endogenous alloy powder and wrapping body will not form intermetallic compounds composed of the main elements in M and the main elements in A after being completely melted and re-solidified, but form an endogenous Mₐ₁A_{b1}T_{c1} alloy powder and a A_{b2}T_{c2} wrapping body.

2. The method for preparing a metal material composed of endogenous alloy powder and wrapping body according to claim 1, wherein the shape of the metal material composed of endogenous alloy powder and wrapping body is related to the solidification methods: in case of continuous casting, its shape is mainly lath shape ; in case of melt spinning, its shape is mainly ribbon or sheet shape; in case of melt extraction, its shape is mainly wire shape.

3. The method for preparing a metal material composed of endogenous alloy powder and wrapping body according to claim 1, wherein T is the collection of O, H, N, P, S, F, Cl elements, and T includes O, and 0<cl<1.5%.

4. The method for preparing a metal material composed of endogenous alloy powder and wrapping body according to claim 1, wherein M includes at least one of W, Cr, Mo, V, Ta, Nb, Zr, Hf, Ti, Fe, Co, Ni, Mn, Cu, and Ag, and A includes at least one of Y, La, Ce, Pr, Nd, Pm, Sm, Eu, Gd, Tb, Dy, Ho, Er, Tm, Yb, Lu, Mg, Ca, Li, Na, K, In, Pb, and Zn.

5. The method for preparing a metal material composed of endogenous alloy powder and wrapping body according to claim 1, wherein M includes at least one of Ir, Ru, Re, Os, Tc, W, Cr, Mo, V, Ta, and Nb, and A includes Cu.

6. The method for preparing a metal material composed of endogenous alloy powder and wrapping body according to claim 5, wherein the metal material composed of endogenous alloy powder and wrapping body is metal material ribbon composed of endogenous alloy powder and wrapping body with a thickness of 10µm∼5mm, and the particle size of the endogenous alloy powder is in a range of 3nm to 200µm.

7. The method for preparing a metal material composed of endogenous alloy powder and wrapping body according to claim 1, wherein 0<b1≤15%.

8. The method for preparing a metal material composed of endogenous alloy powder and wrapping body according to claim 1, wherein the number of mono-crystalline particles in the endogenous alloy powder accounts for more than 60% of the total number of the particles.

9. The method for preparing a metal material composed of endogenous alloy powder and wrapping body according to claim 1, wherein the Mₐ₀A_{b0}T_{c0} initial alloy melt is prepared by melting alloy raw materials that comprise the first and the second raw materials; the major elementary composition of the first raw material is M_{d1}Tₑ₁, and the major elementary composition of the second raw material is A_{d2}Tₑ₂, d1, e1, d2 and e2 represent the atomic percentage contents of the corresponding constituent elements respectively, and 0<e1≤10%, 0<e2≤10%, d1+e1=100%, d2+e2=100%.

10. The method for preparing a metal material composed of endogenous alloy powder and wrapping body according to claim 9, wherein the content of impurity T in endogenous Mₐ₁A_{b1}T_{c1} alloy powder is greatly reduced compared with that of M_{d1}Tₑ₁ raw materials, that is, c1 is less than e1.

11. The method for preparing a metal material composed of endogenous alloy powder and wrapping body according to claim 9, wherein, in the metal material composed of endogenous alloy powder and wrapping body, the volume percentage of the endogenous Mₐ₁A_{b1}T_{c1} alloy powder is equivalent to the volume percentage of the M_{d1}Tₑ₁ raw material during the raw materials preparation process.

12. The method for preparing a metal material composed of endogenous alloy powder and wrapping body according to claim 1, wherein the lower limit of the volume percentage content of the endogenous alloy powder in the metal material composed of endogenous alloy powder and wrapping body is 1%, and the upper limit is the volume percentage content that the endogenous alloy powder can be dispersively distributed in the wrapping body.

13. The method for preparing a metal material composed of endogenous alloy powder and wrapping body according to claim 1, wherein the volume percentage content of the endogenous alloy powder in the metal material composed of endogenous alloy powder and wrapping body ranges from 1% to 50%.

14. A method for preparing alloy powder, wherein the alloy powder is prepared by removing the wrapping body part of the metal material composed of endogenous alloy powder and wrapping body which is prepared by any of the methods according to claim 1 to 13, while retaining the endogenous alloy powder which cannot be simultaneously removed.

15. The method for preparing alloy powder according to claim 14, wherein the methods for removing the wrapping body while retaining the endogenous alloy powder include at least one of an acid solution dissolution reaction for removal, an alkali solution dissolution reaction for removal, a vacuum volatilization for removal, and a wrapping body natural oxidation-powdering peeling removal.

16. The method for preparing alloy powder according to claim 14, wherein M includes Fe, and A includes La, the metal material composed of endogenous alloy powder and wrapping body is a metal ribbon formed by the endogenous Fe alloy powder and La wrapping body, the endogenous Fe alloy powder contains element La in solid solution, through the natural oxidation-powdering peeling of the La wrapping body, the endogenous Fe alloy powder is pre-separated from the oxide powder of La matrix, then based on the magnetic properties of the Fe alloy powder, the magnetic field is used to separate the Fe alloy powder and the oxide powder of La matrix.

17. The method for preparing alloy powder according to claim 14, wherein the particle size of the alloy powder ranges from 3nm to 10mm.

18. A method for preparing spherical or sub-spherical alloy powder, wherein the spherical or sub-spherical alloy powder is prepared through a plasma spheroidization treatment of the alloy powder according to claim 14.

19. The method for preparing spherical or sub-spherical alloy powder according to claim 18, wherein before the plasma spheroidization treatment the selected particles are subject to jet mill pre-crushing treatment or (and) screening treatment.

20. A metal material composed of endogenous alloy powder and wrapping body, wherein the metal material composed of endogenous alloy powder and wrapping body is prepared by any one of the preparation methods of metal material composed of endogenous alloy powder and wrapping body according to claim 1 to 13.

21. An alloy powder, wherein the alloy powder is prepared by the method for preparing alloy powder according to claim 14.

22. A spherical or sub-spherical alloy powder, wherein the spherical or sub-spherical alloy powder is prepared by the method for preparing spherical or sub-spherical alloy powder according to claim 18.

23. An application of the metal material composed of endogenous alloy powder and wrapping body in coatings and composite materials, wherein the metal material composed of endogenous alloy powder and wrapping body is prepared by any one of the preparation methods of metal material composed of endogenous alloy powder and wrapping body according to claim 1 to 13.

24. The application of a metal material composed of endogenous alloy powder and wrapping body in coatings and composite materials, wherein after the preparation of the metal material composed of endogenous alloy powder and wrapping body, the wrapping body is not removed immediately, and subsequently the endogenous alloy powder is tried to be protected by other ways from being contaminated by impurities such as oxygen, but the wrapping body is directly used to protect the endogenous powder from being naturally oxidized. Such metal material composed of the endogenous powder and the wrapping body can be directly used as a raw material for downstream production. When the endogenous powder is needed for the downstream production, based on the characteristics of the next working procedure, the endogenous powders are released from the wrapping body in the shortest possible time, so as the chance of contamination of the alloy powder is greatly reduced.

25. The application of a metal material composed of endogenous alloy powder and wrapping body in coatings and composite materials, wherein the metal material composed of endogenous alloy powder and wrapping body with the average particle size of the endogenous alloy powder lower than 1000nm is selected and its wrapping body is removed; the obtained alloy powder is mixed with other components of the coatings or composite materials at the same time or immediately after the removal of the wrapping body, so as to reduce the content of impurities including O, which is newly introduced on the surface of the alloy powder due to the exposure of the alloy powder surface; thus coatings or composite materials added with high-purity, ultra-fine and high-activity alloy powder can be obtained, which can be applied in various fields including anti-bacterial coatings, weatherproof coatings, camouflage coatings, wave-absorbing coatings, wear-resistant coatings, anti-corrosive coatings, and resin-based composites.

26. An application of the alloy powder in powder metallurgy, metal injection molding, magnetic materials and coatings, wherein the alloy powder is prepared by the method for preparing alloy powder according to claim 14.

27. An application of the alloy powder in catalysis, sterilization, metal powder 3D printing and composite materials, wherein the alloy powder is prepared by the method for preparing alloy powder according to claim 14.

28. An application of the spherical or sub-spherical alloy powder in powder metallurgy, metal injection molding and metal powder 3D printing, wherein the spherical or sub-spherical alloy powder is prepared by the method for preparing spherical or sub-spherical alloy powder according to claim 18.

29. A metal material composed of endogenous alloy powder and wrapping body, wherein the metal material is prepared by solidification of the alloy melt, and the structure of the metal material includes the dispersed particle phase endogenously precipitated during the solidification of the initial alloy and the matrix phase wrapping the dispersed particles, which correspond to the endogenous alloy powder and the wrapping body, respectively; the major elementary composition of the endogenous alloy powder is Mₐ₁A_{b1}T_{c1}, and the major elementary composition of the wrapping body is A_{b2}T_{c2}; both M and A contain one or more metal elements, T is the impurity element including oxygen, a1, b1, c1, b2, c2 represent the atomic percentage contents of the corresponding element respectively, and a1+b1+c1=100%, b2+c2=100%, c2>c1>0, b1>0; the melting point of the endogenous alloy powder is higher than that of the wrapping body; the endogenous Mₐ₁A_{b1}T_{c1} alloy powder contain element A in solid solution; the M and A comprise a pair or pairs of M¹-A¹ element combinations that will not form corresponding intermetallic compounds, wherein M¹ represents any single element in M and A¹ represents any single element in A, and the main elements in M is composed of each M¹ element that satisfy the combination conditions of M¹-A¹, and the main elements in A is composed of each A¹ element that satisfy the combination conditions of M¹-A¹, so that the metal material composed of endogenous alloy powder and wrapping body will not form intermetallic compounds composed of the main elements in M and the main elements in A after being completely melted and re-solidified, but form an endogenous Mₐ₁A_{b1}T_{c1} alloy powder and a A_{b2}T_{c2} wrapping body.

30. The metal material composed of endogenous alloy powder and wrapping body according to claim 29, wherein M includes at least one of W, Cr, Mo, V, Ta, Nb, Zr, Hf, Ti, Fe, Co, Ni, Mn, Cu, and Ag, A includes at least one of Y, La, Ce, Pr, Nd, Pm, Sm, Eu, Gd, Tb, Dy, Ho, Er, Tm, Yb, Lu, Mg, Ca, Li, Na, K, In, Pb, and Zn, and T is the collection of O, H, N, P, S, F, Cl elements, and T includes O, and 0<c1≤1.5%, and 0<b1≤15%.

31. An alloy powder, wherein the alloy powder is prepared by removing the wrapping body in any one of the metal materials composed of endogenous alloy powder and wrapping body according to claim 29 and claim 30, and its major elementary composition is Mₐ₃A_{b3}T_{c3}, a3, b3, and c3 represent the atomic percentage contents of the corresponding elementary compositions respectively, b3>0, a3+b3+c3=100%, and the content of element T in the alloy powder is higher than that in any one of the endogenous alloy powder according to claim 29 and 30, that is, c3>c1>0.

32. A spherical or sub-spherical alloy powder, wherein the spherical or sub-spherical alloy powder is prepared through a plasma spheroidization treatment of the alloy powder according to claim 31, and its major elementary composition is Mₐ₄A_{b4}T_{c4}, a4, b4, and c4 represent the atomic percentage contents of the corresponding elementary compositions respectively, b4>0, a4+b4+c4=100%, and the content of element T in the spherical or sub-spherical alloy powder is higher than that in the alloy powder without plasma spheroidization treatment, that is, c4>c3>c1>0.

33. A method for preparing a metal material composed of endogenous alloy powder and wrapping body, which is prepared by the following steps:
(1) melting initial alloy melt with the main elementary composition of Mₐ₀A_{b0}T_{c0}, wherein both M and A contain one or more metal elements, T is the impurity element including oxygen, a0, b0 and c0 represent the atomic percentage contents of the corresponding element respectively, a0+b0+c0=100%, 0<c0; the M and A comprise a pair or pairs of M¹-A¹ element combinations that will not form corresponding intermetallic compounds, wherein M¹ represents any single element in M and A¹ represents any single element in A, and the main elements in M is composed of each M¹ element that satisfy the combination conditions of M¹-A¹, and the main elements in A is composed of each A¹ element that satisfy the combination conditions of M¹-A¹,
(2) solidifying the Mₐ₀A_{b0}T_{c0} initial alloy melt into a solid state, thus obtaining dispersed Mₐ₁A_{b1}T_{c1} particle phase endogenously precipitated from the melt and A_{b2}T_{c2} matrix phase wrapping the dispersed particles, which are the metal material composed of endogenous alloy powder and wrapping body according to any one of claim 29 and 30, and 0<c1<c0<c2.

34. The method for preparing a metal material composed of endogenous alloy powder and wrapping body according to claim 33, wherein the Mₐ₀A_{b0}T_{c0} initial alloy melt is prepared by melting alloy raw materials that comprise the first and the second raw materials; the major elementary composition of the first raw material is M_{d1}Tₑ₁, and the major elementary composition of the second raw material is A_{d2}Tₑ₂, d1, e1, d2 and e2 represent the atomic percentage contents of the corresponding constituent elements respectively, and 0<e1≤10%, 0<e2≤10%, d1+e1=100%, d2+e2=100%.

35. A method for preparing alloy powder, wherein the alloy powder is prepared by removing the wrapping body part of the metal material composed of endogenous alloy powder and wrapping body according to claim 29 to 30, while retaining the endogenous alloy powder which cannot be simultaneously removed.

36. An application of the alloy powder according to claim 31, or the alloy powder prepared by the preparation method according to claim 35 in powder metallurgy, metal injection molding, magnetic materials, and coatings.

37. An application of the spherical or sub-spherical alloy powder according to claim 32 in powder metallurgy, metal injection molding and metal powder 3D printing.

38. An application of the metal material composed of endogenous alloy powder and wrapping body according to any one of the claim 29 to 30, or the metal material composed of endogenous alloy powder and wrapping body prepared by the preparation method according to any one of the claim 33 to 34 in coatings and composite materials.
